# EUROPEAN PATENT SPECIFICATION

(11) **EP 3 234 767 B1**
(45) Date of publication and mention of the grant of the patent: **13.05.2020**
(21) Application number: 15870563.2
(22) Date of filing: 16.11.2015
(51) Int. Cl.: G06F 9/30, G06F 9/38

(54) **METHOD AND APPARATUS FOR IMPLEMENTING AND MAINTAINING A STACK OF PREDICATE VALUES WITH STACK SYNCHRONIZATION INSTRUCTIONS IN AN OUT OF ORDER HARDWARE SOFTWARE CO-DESIGNED PROCESSOR**
VERFAHREN UND VORRICHTUNG ZUR IMPLEMENTIERUNG UND AUFRECHTERHALTUNG EINES STAPELS VON PRÄDIKATWERTEN MIT STAPELSYNCHRONISATIONSBEFEHLEN BEI EINEM DEFEKTEN HARDWARE-SOFTWARE-PROZESSOR IM CO-DESIGN
PROCÉDÉ ET APPAREIL D'IMPLÉMENTATION ET DE MAINTIEN D'UNE PILE DE VALEURS DE PRÉDICAT AU MOYEN D'INSTRUCTIONS DE SYNCHRONISATION DE PILES DANS UN PROCESSEUR DE CONCEPTION CONJOINTE MATÉRIELLE-LOGICIELLE EN PANNE

(30) Priority: 19.12.2014 US 201414576915
(43) Date of publication of application: 25.10.2017
(73) Proprietor: Intel Corporation, Santa Clara, CA 95054 (US)
(72) Inventor: COLLINS, Jamison D., San Jose, California 95134 (US); IYER, Jayesh, KA Bangalore 560016 (IN); WINKEL, Sebastian, Los Altos, CA 94024 (US); XEKALAKIS, Polychronis, San Jose, California 95134 (US); CHEN, Howard H., Sunnyvale, California 94086 (US); BRAUCH, Rupert, Sunnyvale, California 94087 (US)
(74) Representative: Samson & Partner Patentanwälte mbB
(86) International application number: PCT/US2015/060814
(87) International publication number: WO 2016/099734

(56) References cited:
- US-A- 5 440 747
- US-A- 5 748 936
- US-A- 6 047 369
- US-A- 6 157 996
- US-A1- 2006 149 921
- US-A1- 2008 046 704
- US-B1- 6 170 052
- US-B1- 6 574 728
- US-B2- 7 886 132

## Description

### FIELD OF THE INVENTION

The present disclosure pertains to the field of processing logic, microprocessors, and associated instruction set architecture that, when executed by the processor or other processing logic, perform logical, mathematical, or other functional operations.

### DESCRIPTION OF RELATED ART

Traditional processor architectures implement conditional execution through logical branching. Some processor architectures enable instructions to be speculatively executed to enhance the available instruction level parallelism in the program. Some branch prediction implementations are highly accurate under most circumstances. However, when the prediction is incorrect, the recovery cost and misprediction penalty may be significant. Instruction predication is an architectural feature that removes branches (by converting a control dependency to a data dependency) used for conditional execution of instructions. When instruction predication is implemented, the execution or retirement of an instruction is conditional and based on the predicate value held in a separate predicate register. However, instruction predication may be a complex feature to integrate into out-of-order pipelines.

US 6 574 728 B1 relates to condition code stack architecture systems and methods used in computer systems. The computer system includes a register file and an arithmetic logic unit (ALU) for reading data from the register file. The ALU is configured to conduct data processing of the data which was and to store the results of the data processing in the register file. The computer system further includes a condition code stack configured to hold data indicative of the context results of the data processing by the ALU. The ALU is further configured to query the condition code stack for predetermined bit values to determine operations controlled by the ALU. In particular, value of a specified data item in a condition code stack is queried, and the queried value of the data item is used to implement transfer control.

US 6 047 369 A relates to the field of microprocessor architecture for increasing processing efficiency within microprocessors by removing false data dependencies between instructions by renaming flags and by using flag masks. A mechanism and method for renaming flags within a register alias table ("RAT") to increase processor parallelism and also providing and using flag masks associated with individual instructions. In order to reduce the amount of data dependencies between instructions that are concurrently processed, the flags used by these instructions are renamed. A RAT unit provides register renaming to provide a larger physical register set than would ordinarily be available within a given macroarchitecture's logical register set to eliminate false data dependencies between instructions that reduce overall superscalar processing performance for the microprocessor. The renamed flag registers contain several flag bits and various flag bits may be updated or read by different instructions. Also, static and dynamic flag masks are associated with particular instructions and indicate which flags are capable of being updated by a particular instruction and also indicate which flags are actually updated by the instruction. Static flag masks are used in flag renaming and dynamic flag masks are used at retirement.

US 2006/149 921 A1 relates to techniques for sharing control components across multiple processing elements. For example, common control components, including a control store and instruction control unit, are shared across multiple processing cores on a combined microengine. Each processing core includes a respective datapath and register file. Instruction gating logic is employed to selectively forward decoded instructions received from the instruction control unit to the datapaths. The instruction gating logic receives input from predicate stacks used to store control logic corresponding to current conditional blocks of instructions. In response to evaluation of a conditional statement, a logical true or false value is pushed onto a predicate stack based on the result. Upon completing the conditional block, the true/false value is popped off of the predicate stack. This predicate stack mechanism supports nested conditional blocks, and the control sharing mechanisms supports (substantially) concurrent execution of multiple threads on the combined microengine.

US 5 440 747 A pertains to a data processor that has logic for storing during the handling of break and standard interrupt requests the operation mode the data processor was in just prior to the handling of the break interrupt request. A data processor that includes an interrupt controller, a condition code register, a condition code stacking register, a data memory with a stacking area, a data processing unit, and an interrupt request decoder. The interrupt controller receives interrupt request signals including a break interrupt request signal and a plurality of standard interrupt request signals. The condition code register stores condition code values including a data processor mode control value. The data processing unit performs data processing operations. The data processing operations are suspended when the data processor mode control value is set to a predefined "sleep mode" value and are enabled when the data processor mode control value is set to a predefined "run mode". The interrupt decoder responds to a received break interrupt request signal by generating: (A) first, condition code register control signals to copy the mode control value stored in the condition code register into the condition code stacking register, (B) second, condition code register control signals to set the mode control value to-the predefined "run mode" value. It responds to a standard interrupt request signal by generating: (A) first, condition code register control signals to set the mode control value to the predefined "run mode" value; and (B), second, condition code register control signals to copy the mode control value stored in the condition code register into the data stacking area.

### SUMMARY

The present invention is defined in the independent claims. The dependent claims define embodiments thereof.

### DESCRIPTION OF THE FIGURES

Embodiments are illustrated by way of example and not limitation in the Figures of the accompanying drawings, in which:

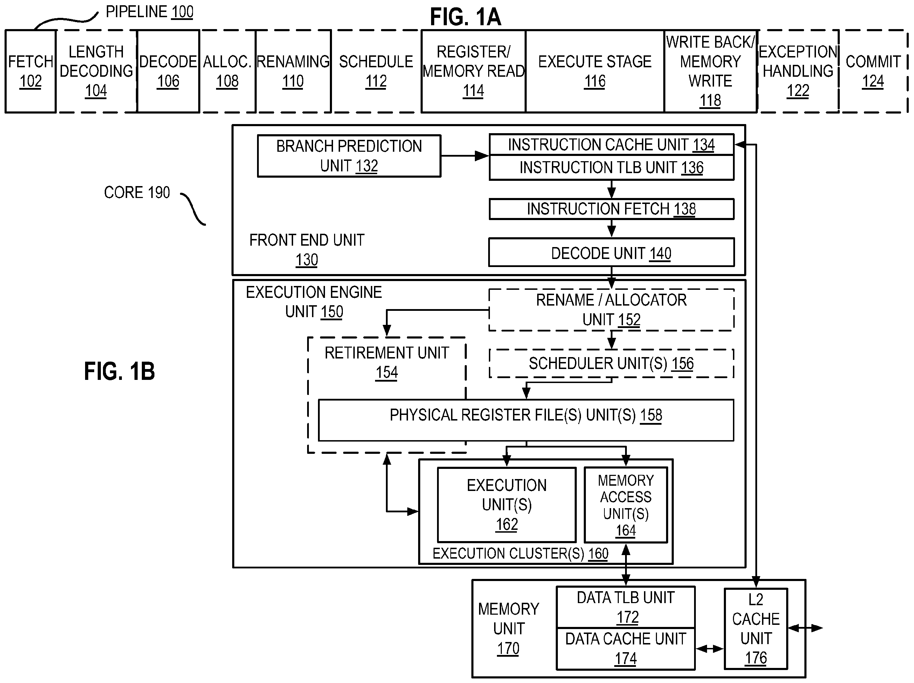

**FIG. 1A** is a block diagram illustrating both an exemplary in-order fetch, decode, retire pipeline and an exemplary register renaming, out-of-order issue/execution pipeline according to embodiments;
**FIG. 1**B is a block diagram illustrating both an exemplary embodiment of an in-order fetch, decode, retire core and an exemplary register renaming, out-of-order issue/execution architecture core to be included in a processor according to embodiments;
**FIG. 2A**-B are block diagrams of a more specific exemplary in-order core architecture
**FIG. 3** is a block diagram of a single core processor and a multicore processor with integrated memory controller and special purpose logic;
**FIG. 4** illustrates a block diagram of a system in accordance with an embodiment;
**FIG. 5** illustrates a block diagram of a second system in accordance with an embodiment;
**FIG. 6** illustrates a block diagram of a third system in accordance with an embodiment;
**FIG. 7** illustrates a block diagram of a system on a chip (SoC) in accordance with an embodiment;
**FIG. 8** illustrates a block diagram contrasting the use of a software instruction converter to convert binary instructions in a source instruction set to binary instructions in a target instruction set according to embodiments;
**FIG. 9** is a block diagram of an exemplary pipeline for an out-of-order processor implementing predicate renaming with a register alias table;
**FIG. 10** is a block diagram of a pipeline for an out-of-order processor implementing a predicate register stack, according to an embodiment;
**FIG. 11** is a block diagram of an exemplary processor in which embodiments may be implemented;
**FIG. 12A**-B are a block diagrams of processor components for implementing a predicate register stack, according to an embodiment;
**FIG. 13** is a block diagram of a processing system including instructions to manage a predicate stack, according to an embodiment;
**FIG. 14** is a flow diagram for logic to process an exemplary predicate stack management instruction, according to an embodiment;
**FIG. 15A**-C are a flow diagrams for specific predicate stack management instructions, according to embodiments;
**FIGS. 16A**-B are block diagrams illustrating a generic vector friendly instruction format and instruction templates thereof according to embodiments;
**FIGS. 17A**-D are block diagrams illustrating an exemplary specific vector friendly instruction format according to embodiments of the invention; and
**FIG. 18** is a block diagram of scalar and vector register architecture according to an embodiment.

### DETAILED DESCRIPTION

Current implementations of predication typically implement predicate registers in a similar manner as a traditional register file. In such implementations, a predicate register is explicitly identified by an instruction using a logical register specifier. The logical register specifier is converted to a physical register specifier at the renaming stage of the processor pipeline using a structure similar to a register alias table (RAT). Freeing the physical register held by a particular logical register occurs when the logical register is overwritten. Accordingly, implementing a predicate register file has similar complexities as those of general-purpose registers.

In several embodiments, a lightweight stack-based predication design is disclosed. The stack-based design may be enabled with reduced impact on architectural and microarchitecture features. The microarchitectural implementation (e.g., register renaming, register file implementation) enables reduced die area and reduced operational power compared to a traditional predication design. The microarchitectural implementation also enables changes to the instruction pipeline to improve branch prediction performance in one embodiment.

Described below are processor core architectures, followed by descriptions of exemplary processors and computer architectures having an exemplary predicate register and instruction implementation according to embodiments described herein. Numerous specific details are set forth in order to provide a thorough understanding of the embodiments of the invention described below. It will be apparent, however, to one skilled in the art that the embodiments may be practiced without some of these specific details. In other instances, well-known structures and devices are shown in block diagram form to avoid obscuring the underlying principles of the various embodiments.

Embodiments described herein may be implemented in a hardware/software co-designed processor.

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing.

Processors may be implemented using a single processor core design or a multiple processor core design. The processor cores within the processor may be homogenous or heterogeneous in terms of architecture instruction set. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (e.g., many integrated core processors). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality.

### Exemplary Core Architectures

### In-order and out-of-order core block diagram

**Figure 1A** is a block diagram illustrating an exemplary in-order pipeline and an exemplary register renaming out-of-order issue/execution pipeline, according to an embodiment. **Figure** 1**B** is a block diagram illustrating both an exemplary embodiment of an in-order architecture core and an exemplary register renaming, out-of-order issue/execution architecture core to be included in a processor according to an embodiment. The solid lined boxes in Figures 1A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In Figure 1A, a processor pipeline 100 includes a fetch stage 102, a length decode stage 104, a decode stage 106, an allocation stage 108, a renaming stage 110, a scheduling (also known as a dispatch or issue) stage 112, a register read/memory read stage 114, an execute stage 116, a write back/memory write stage 118, an exception handling stage 122, and a commit stage 124.

Figure 1B shows processor core 190 including a front end unit 130 coupled to an execution engine unit 150, and both are coupled to a memory unit 170. The core 190 may be a reduced instruction set computing (RISC) core, a complex instruction set computing (CISC) core, a very long instruction word (VLIW) core, or a hybrid or alternative core type. As yet another option, the core 190 may be a special-purpose core, such as, for example, a network or communication core, compression engine, coprocessor core, general purpose computing graphics processing unit (GPGPU) core, graphics core, or the like.

The front end unit 130 includes a branch prediction unit 132 coupled to an instruction cache unit 134, which is coupled to an instruction translation lookaside buffer (TLB) 136, which is coupled to an instruction fetch unit 138, which is coupled to a decode unit 140. The decode unit 140 (or decoder) may decode instructions, and generate as an output one or more micro-operations, micro-code entry points, microinstructions, other instructions, or other control signals, which are decoded from, or which otherwise reflect, or are derived from, the original instructions. The decode unit 140 may be implemented using various different mechanisms. Examples of suitable mechanisms include, but are not limited to, look-up tables, hardware implementations, programmable logic arrays (PLAs), microcode read only memories (ROMs), etc. In one embodiment, the core 190 includes a microcode ROM or other medium that stores microcode for certain macroinstructions (e.g., in decode unit 140 or otherwise within the front end unit 130). The decode unit 140 is coupled to a rename/allocator unit 152 in the execution engine unit 150.

The execution engine unit 150 includes the rename/allocator unit 152 coupled to a retirement unit 154 and a set of one or more scheduler unit(s) 156. The scheduler unit(s) 156 represents any number of different schedulers, including reservations stations, central instruction window, etc. The scheduler unit(s) 156 is coupled to the physical register file(s) unit(s) 158. Each of the physical register file(s) units 158 represents one or more physical register files, different ones of which store one or more different data types, such as scalar integer, scalar floating point, packed integer, packed floating point, vector integer, vector floating point, status (e.g., an instruction pointer that is the address of the next instruction to be executed), etc. In one embodiment, the physical register file(s) unit 158 comprises a vector registers unit, a write mask registers unit, and a scalar registers unit. These register units may provide architectural vector registers, vector mask registers, and general-purpose registers. The physical register file(s) unit(s) 158 is overlapped by the retirement unit 154 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 154 and the physical register file(s) unit(s) 158 are coupled to the execution cluster(s) 160. The execution cluster(s) 160 includes a set of one or more execution units 162 and a set of one or more memory access units 164. The execution units 162 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 156, physical register file(s) unit(s) 158, and execution cluster(s) 160 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 164). It should also be understood that where separate pipelines are used, one or more of these pipelines may be out-of-order issue/execution and the rest in-order.

The set of memory access units 164 is coupled to the memory unit 170, which includes a data TLB unit 172 coupled to a data cache unit 174 coupled to a level 2 (L2) cache unit 176. In one exemplary embodiment, the memory access units 164 may include a load unit, a store address unit, and a store data unit, each of which is coupled to the data TLB unit 172 in the memory unit 170. The instruction cache unit 134 is further coupled to a level 2 (L2) cache unit 176 in the memory unit 170. The L2 cache unit 176 is coupled to one or more other levels of cache and eventually to a main memory.

By way of example, the exemplary register renaming, out-of-order issue/execution core architecture may implement the pipeline 100 as follows: 1) the instruction fetch 138 performs the fetch and length decoding stages 102 and 104; 2) the decode unit 140 performs the decode stage 106; 3) the rename/allocator unit 152 performs the allocation stage 108 and renaming stage 110; 4) the scheduler unit(s) 156 performs the schedule stage 112; 5) the physical register file(s) unit(s) 158 and the memory unit 170 perform the register read/memory read stage 114; the execution cluster 160 perform the execute stage 116; 6) the memory unit 170 and the physical register file(s) unit(s) 158 perform the write back/memory write stage 118; 7) various units may be involved in the exception handling stage 122; and 8) the retirement unit 154 and the physical register file(s) unit(s) 158 perform the commit stage 124.

The core 190 may support one or more instructions sets (e.g., the x86 instruction set (with some extensions that have been added with newer versions); the MIPS instruction set of MIPS Technologies of Sunnyvale, CA; the ARM® instruction set (with optional additional extensions such as NEON) of ARM Holdings of Cambridge, England), including the instruction(s) described herein. In one embodiment, the core 190 includes logic to support a packed data instruction set extension (e.g., AVX1, AVX2, etc.), allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel® Hyper-Threading Technology).

While register renaming is described in the context of out-of-order execution, it should be understood that register renaming may be used in an in-order architecture. While the illustrated embodiment of the processor also includes separate instruction and data cache units 134/174 and a shared L2 cache unit 176, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

### Specific Exemplary In-Order Core Architecture

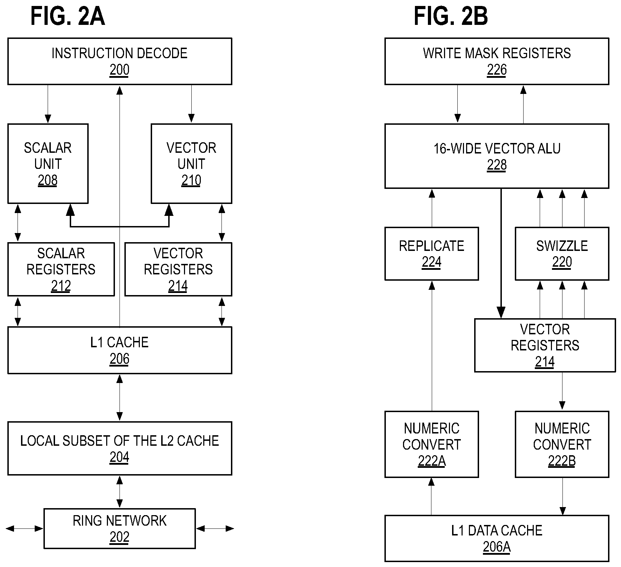

**Figures 2A**-B are block diagrams of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory I/O interfaces, and other necessary I/O logic, depending on the application.

Figure 2A is a block diagram of a single processor core, along with its connection to the on-die interconnect network 202 and with its local subset of the Level 2 (L2) cache 204, according to an embodiment. In one embodiment, an instruction decoder 200 supports the x86 instruction set with a packed data instruction set extension. An L1 cache 206 allows low-latency accesses to cache memory into the scalar and vector units. While in one embodiment (to simplify the design), a scalar unit 208 and a vector unit 210 use separate register sets (respectively, scalar registers 212 and vector registers 214) and data transferred between them is written to memory and then read back in from a level 1 (L1) cache 206, alternative embodiments may use a different approach (e.g., use a single register set or include a communication path that allow data to be transferred between the two register files without being written and read back).

The local subset of the L2 cache 204 is part of a global L2 cache that is divided into separate local subsets, one per processor core. Each processor core has a direct access path to its own local subset of the L2 cache 204. Data read by a processor core is stored in its L2 cache subset 204 and can be accessed quickly and in parallel with other processor cores accessing their own local L2 cache subsets. Data written by a processor core is stored in its own L2 cache subset 204 and is flushed from other subsets, if necessary. The ring network ensures coherency for shared data. The ring network is bi-directional to allow agents such as processor cores, L2 caches and other logic blocks to communicate with each other within the chip. Each ring datapath is 1012-bits wide per direction.

Figure 2B is an expanded view of part of the processor core in Figure 2A according to an embodiment. Figure 2B includes an L1 data cache 206A part of the L1 cache 204, as well as more detail regarding the vector unit 210 and the vector registers 214. Specifically, the vector unit 210 is a 16-wide vector-processing unit (VPU) (see the 16-wide ALU 228), which executes one or more of integer, single-precision float, and double precision float instructions. The VPU supports swizzling the register inputs with swizzle unit 220, numeric conversion with numeric convert units 222A-B, and replication with replication unit 224 on the memory input. Write mask registers 226 allow predicating resulting vector writes.

### Processor with integrated memory controller and special purpose logic

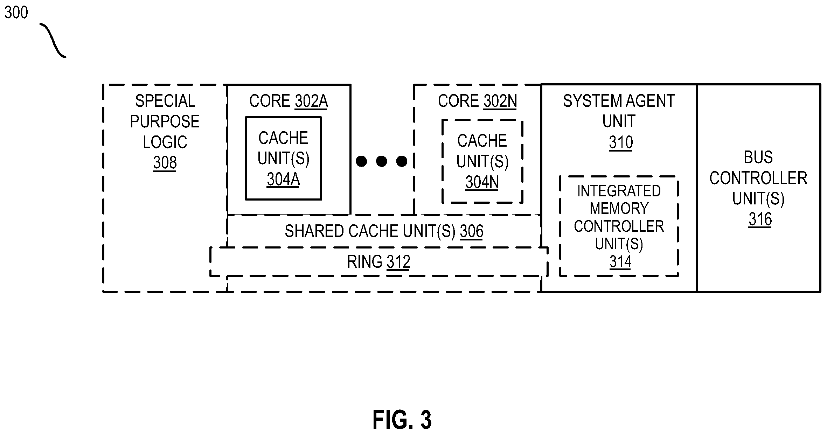

**Figure 3** is a block diagram of a processor 300 that may have more than one core, may have an integrated memory controller, and may have integrated graphics according to an embodiment. The solid lined boxes in Figure 3 illustrate a processor 300 with a single core 302A, a system agent 310, a set of one or more bus controller units 316, while the optional addition of the dashed lined boxes illustrates an alternative processor 300 with multiple cores 302A-N, a set of one or more integrated memory controller unit(s) 314 in the system agent unit 310, and special purpose logic 308.

Thus, different implementations of the processor 300 may include: 1) a CPU with the special purpose logic 308 being integrated graphics and/or scientific (throughput) logic (which may include one or more cores), and the cores 302A-N being one or more general purpose cores (e.g., general purpose in-order cores, general purpose out-of-order cores, a combination of the two); 2) a coprocessor with the cores 302A-N being a large number of special purpose cores intended primarily for graphics and/or scientific (throughput); and 3) a coprocessor with the cores 302A-N being a large number of general purpose in-order cores. Thus, the processor 300 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 300 may be a part of and/or may be implemented on one or more substrates using any of a number of process technologies, such as, for example, BiCMOS, CMOS, or NMOS.

The memory hierarchy includes one or more levels of cache within the cores, a set or one or more shared cache units 306, and external memory (not shown) coupled to the set of integrated memory controller units 314. The set of shared cache units 306 may include one or more mid-level caches, such as level 2 (L2), level 3 (L3), level 4 (L4), or other levels of cache, a last level cache (LLC), and/or combinations thereof. While in one embodiment a ring based interconnect unit 312 interconnects the integrated graphics logic 308, the set of shared cache units 306, and the system agent unit 310/integrated memory controller unit(s) 314, alternative embodiments may use any number of well-known techniques for interconnecting such units. In one embodiment, coherency is maintained between one or more cache units 306 and cores 302-A-N.

In some embodiments, one or more of the cores 302A-N are capable of multithreading. The system agent 310 includes those components coordinating and operating cores 302A-N. The system agent unit 310 may include for example a power control unit (PCU) and a display unit. The PCU may be or include logic and components needed for regulating the power state of the cores 302A-N and the integrated graphics logic 308. The display unit is for driving one or more externally connected displays.

The cores 302A-N may be homogenous or heterogeneous in terms of architecture instruction set; that is, two or more of the cores 302A-N may be capable of execution the same instruction set, while others may be capable of executing only a subset of that instruction set or a different instruction set.

### Exemplary Computer Architectures

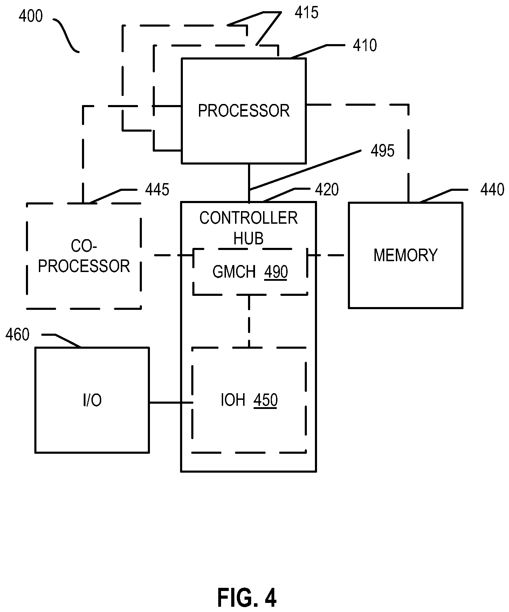

**Figures 4-7** are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

**Figure 4** shows a block diagram of a system 400 in accordance with an embodiment. The system 400 may include one or more processors 410, 415, which are coupled to a controller hub 420. In one embodiment the controller hub 420 includes a graphics memory controller hub (GMCH) 490 and an Input/Output Hub (IOH) 450 (which may be on separate chips); the GMCH 490 includes memory and graphics controllers to which are coupled memory 440 and a coprocessor 445; the IOH 450 is couples input/output (I/O) devices 460 to the GMCH 490. Alternatively, one or both of the memory and graphics controllers are integrated within the processor (as described herein), the memory 440 and the coprocessor 445 are coupled directly to the processor 410, and the controller hub 420 in a single chip with the IOH 450.

The optional nature of additional processors 415 is denoted in Figure 4 with broken lines. Each processor 410, 415 may include one or more of the processing cores described herein and may be some version of the processor 300.

The memory 440 may be, for example, dynamic random access memory (DRAM), phase change memory (PCM), or a combination of the two. For at least one embodiment, the controller hub 420 communicates with the processor(s) 410, 415 via a multi-drop bus, such as a frontside bus (FSB), point-to-point interface such as QuickPath Interconnect (QPI), or similar connection 495.

In one embodiment, the coprocessor 445 is a special-purpose processor, such as, for example, a high-throughput MIC processor, a network or communication processor, compression engine, graphics processor, GPGPU, embedded processor, or the like. In one embodiment, controller hub 420 may include an integrated graphics accelerator.

There can be a variety of differences between the physical resources 410, 415 in terms of a spectrum of metrics of merit including architectural, microarchitectural, thermal, power consumption characteristics, and the like.

In one embodiment, the processor 410 executes instructions that control data processing operations of a general type. Embedded within the instructions may be coprocessor instructions. The processor 410 recognizes these coprocessor instructions as being of a type that should be executed by the attached coprocessor 445. Accordingly, the processor 410 issues these coprocessor instructions (or control signals representing coprocessor instructions) on a coprocessor bus or other interconnect, to coprocessor 445. Coprocessor(s) 445 accept and execute the received coprocessor instructions.

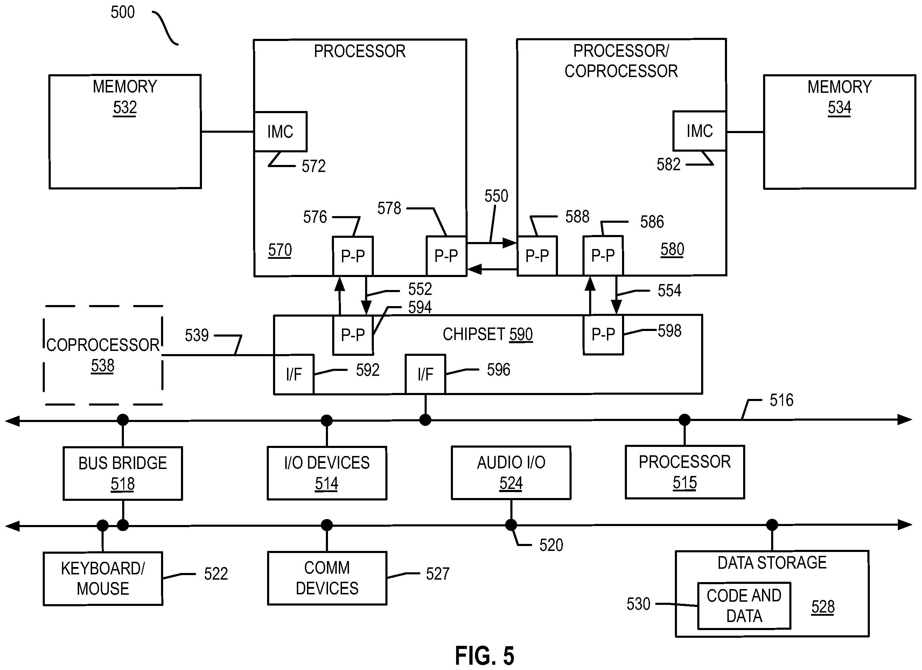

**Figure 5** shows a block diagram of a first more specific exemplary system 500 in accordance with an embodiment. As shown in Figure 5, multiprocessor system 500 is a point-to-point interconnect system, and includes a first processor 570 and a second processor 580 coupled via a point-to-point interconnect 550. Each of processors 570 and 580 may be some version of the processor 300. In one embodiment of the invention, processors 570 and 580 are respectively processors 410 and 415, while coprocessor 538 is coprocessor 445. In another embodiment, processors 570 and 580 are respectively processor 410 coprocessor 445.

Processors 570 and 580 are shown including integrated memory controller (IMC) units 572 and 582, respectively. Processor 570 also includes as part of its bus controller units point-to-point (P-P) interfaces 576 and 578; similarly, second processor 580 includes P-P interfaces 586 and 588. Processors 570, 580 may exchange information via a point-to-point (P-P) interface 550 using P-P interface circuits 578, 588. As shown in Figure 5, IMCs 572 and 582 couple the processors to respective memories, namely a memory 532 and a memory 534, which may be portions of main memory locally attached to the respective processors.

Processors 570, 580 may each exchange information with a chipset 590 via individual P-P interfaces 552, 554 using point to point interface circuits 576, 594, 586, 598. Chipset 590 may optionally exchange information with the coprocessor 538 via a high-performance interface 539. In one embodiment, the coprocessor 538 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 590 may be coupled to a first bus 516 via an interface 596. In one embodiment, first bus 516 may be a Peripheral Component Interconnect (PCI) bus, or a bus such as a PCI Express bus or another third generation I/O interconnect bus, although the scope of the present invention is not so limited.

As shown in Figure 5, various I/O devices 514 may be coupled to first bus 516, along with a bus bridge 518 that couples first bus 516 to a second bus 520. In one embodiment, one or more additional processor(s) 515, such as coprocessors, high-throughput MIC processors, GPGPU's, accelerators (such as, e.g., graphics accelerators or digital signal processing (DSP) units), field programmable gate arrays, or any other processor, are coupled to first bus 516. In one embodiment, second bus 520 may be a low pin count (LPC) bus. Various devices may be coupled to a second bus 520 including, for example, a keyboard and/or mouse 522, communication devices 527 and a storage unit 528 such as a disk drive or other mass storage device that may include instructions/code and data 530, in one embodiment. Further, an audio I/O 524 may be coupled to the second bus 520. Note that other architectures are possible. For example, instead of the point-to-point architecture of Figure 5, a system may implement a multi-drop bus or other such architecture.

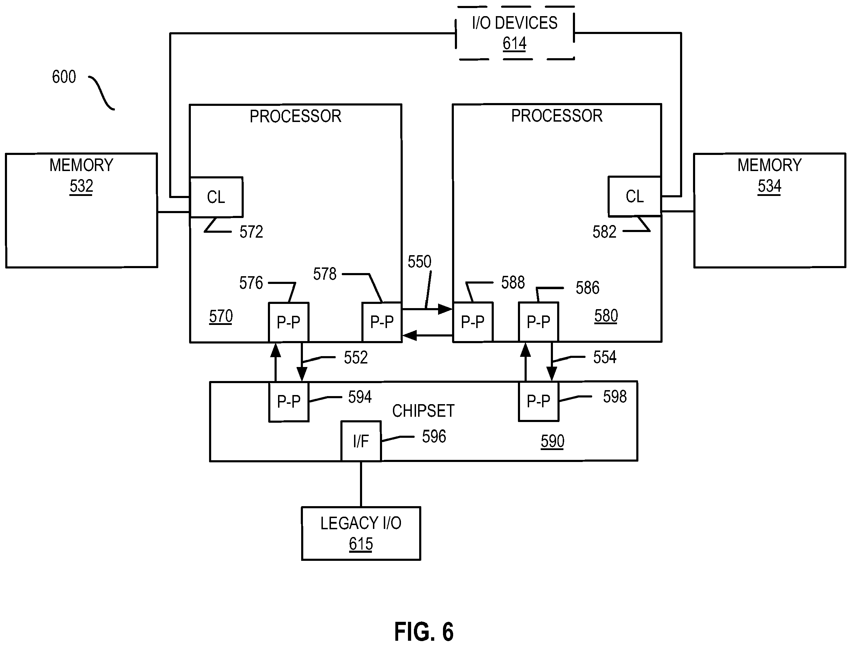

**Figure 6** shows a block diagram of a second more specific exemplary system 600 in accordance with an embodiment. Like elements in Figures 5 and 6 bear like reference numerals, and certain aspects of Figure 5 have been omitted from Figure 6 in order to avoid obscuring other aspects of Figure 6.

Figure 6 illustrates that the processors 570, 580 may include integrated memory and I/O control logic ("CL") 572 and 582, respectively. Thus, the CL 572, 582 include integrated memory controller units and include I/O control logic. Figure 6 illustrates that not only are the memories 532, 534 coupled to the CL 572, 582, but also that I/O devices 614 are also coupled to the control logic 572, 582. Legacy I/O devices 615 are coupled to the chipset 590.

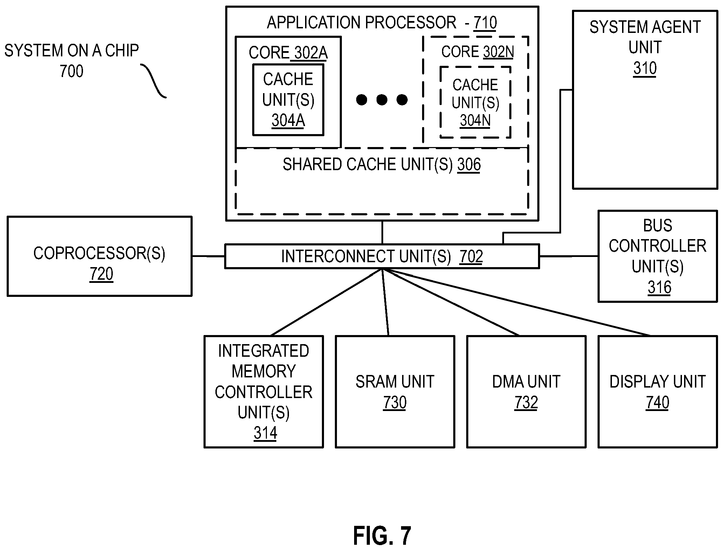

**Figure 7** shows a block diagram of a SoC 700 in accordance with an embodiment. Similar elements in Figure 3 bear like reference numerals. Also, dashed lined boxes are optional features on more advanced SoCs. In Figure 7, an interconnect unit(s) 702 is coupled to: an application processor 710 which includes a set of one or more cores 202A-N and shared cache unit(s) 306; a system agent unit 310; a bus controller unit(s) 316; an integrated memory controller unit(s) 314; a set or one or more coprocessors 720 which may include integrated graphics logic, an image processor, an audio processor, and a video processor; an static random access memory (SRAM) unit 730; a direct memory access (DMA) unit 732; and a display unit 740 for coupling to one or more external displays. In one embodiment, the coprocessor(s) 720 include a special-purpose processor, such as, for example, a network or communication processor, compression engine, GPGPU, a high-throughput MIC processor, embedded processor, or the like.

Embodiments of the mechanisms disclosed herein are implemented in hardware, software, firmware, or a combination of such implementation approaches. Embodiments are implemented as computer programs or program code executing on programmable systems comprising at least one processor, a storage system (including volatile and non-volatile memory and/or storage elements), at least one input device, and at least one output device.

Program code, such as code 530 illustrated in Figure 5, may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative data stored on a machine-readable medium which represents various logic within the processor, which when read by a machine causes the machine to fabricate logic to perform the techniques described herein. Such representations, known as "IP cores" may be stored on a tangible, machine readable medium ("tape") and supplied to various customers or manufacturing facilities to load into the fabrication machines that actually make the logic or processor. For example, IP cores, such as processors developed by ARM Holdings, Ltd. and the Institute of Computing Technology (ICT) of the Chinese Academy of Sciences may be licensed or sold to various customers or licensees and implemented in processors produced by these customers or licensees.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), rewritable compact disks (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

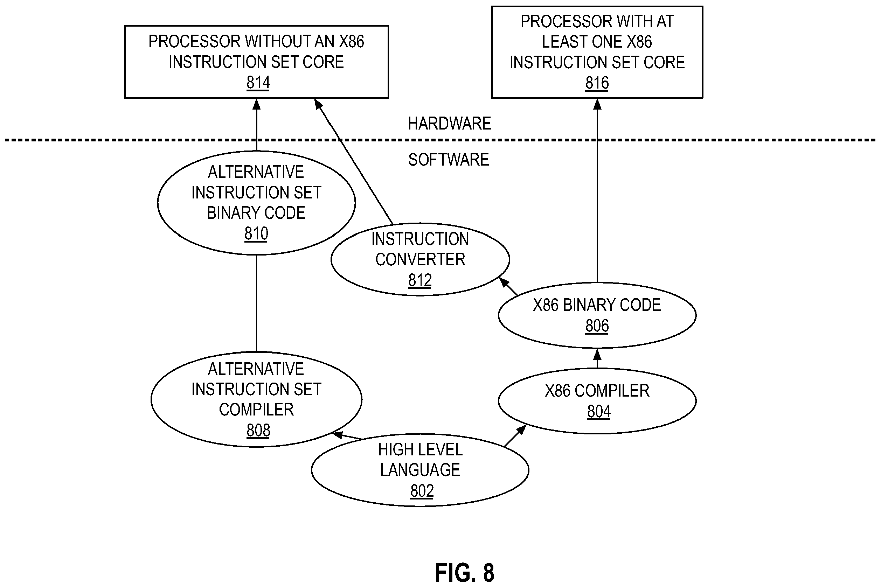

**Figure 8** is a block diagram contrasting the use of a software instruction converter to convert binary instructions in a source instruction set to binary instructions in a target instruction set according to an embodiment. In the illustrated embodiment, the instruction converter is a software instruction converter, although alternatively the instruction converter may be implemented in software, firmware, hardware, or various combinations thereof. Figure 8 shows a program in a high level language 802 may be compiled using an x86 compiler 804 to generate x86 binary code 806 that may be natively executed by a processor with at least one x86 instruction set core 816.

The processor with at least one x86 instruction set core 816 represents any processor that can perform substantially the same functions as an Intel® processor with at least one x86 instruction set core by compatibly executing or otherwise processing (1) a substantial portion of the instruction set of the Intel® x86 instruction set core or (2) object code versions of applications or other software targeted to run on an Intel® processor with at least one x86 instruction set core, in order to achieve substantially the same result as an Intel® processor with at least one x86 instruction set core. The x86 compiler 804 represents a compiler that is operable to generate x86 binary code 806 (e.g., object code) that can, with or without additional linkage processing, be executed on the processor with at least one x86 instruction set core 816. Similarly, Figure 8 shows the program in the high level language 802 may be compiled using an alternative instruction set compiler 808 to generate alternative instruction set binary code 810 that may be natively executed by a processor without at least one x86 instruction set core 814 (e.g., a processor with cores that execute the MIPS instruction set of MIPS Technologies of Sunnyvale, CA and/or that execute the ARM instruction set of ARM Holdings of Cambridge, England).

The instruction converter 812 is used to convert the x86 binary code 806 into code that may be natively executed by the processor without an x86 instruction set core 814. This converted code is not likely to be the same as the alternative instruction set binary code 810 because an instruction converter capable of this is difficult to make; however, the converted code will accomplish the general operation and be made up of instructions from the alternative instruction set. Thus, the instruction converter 812 represents software, firmware, hardware, or a combination thereof that, through emulation, simulation or any other process, allows a processor or other electronic device that does not have an x86 instruction set processor or core to execute the x86 binary code 806.

### Lightweight Stack-Based Predication

Embodiments of lightweight stack-based predication will be described. Embodiments include a registers and renaming logic for a predicate stack implementation that has reduced hardware complexity relative to existing predicate register implementations. Additionally, predicate register renaming and the reclaiming of predicate registers can be performed using simplified logic in comparison to conventional predicate register implementations.

In one embodiment, predicate instructions generate and push predication values onto the predicate stack to enable conditional execution by later instructions. The instructions conditionally execute based on a specified predicate value on the stack. In one embodiment, predicate stack management and synchronization instructions are provided to maintain stack consistency across conditionally executed branches.

In one embodiment the register rename logic for the predicate register stack is moved earlier in the processor instruction pipeline. Early predicate register rename allows the physical register containing the predicate for a predicated instruction to be used as early as the instruction decode stage, with earlier branch outcome computation and improved branch misprediction recovery relative to conventional predicate register implementations.

The performance improvements may be realized while also reducing the cost of implementation by reducing die area requirements for the predicate registers in comparison to existing implementations. The reduced die area may result in a reduction of processor dynamic capacitance and an associated reduction in processor power consumption. Additionally, instruction encoding space requirements may be reduced for instructions that generate predicate values, as an explicit predicate destination register may not be required for the instruction.

In one embodiment, the predication implementation is adapted for implementation in an out-of-order hardware software co-designed processor. Software support for the predicate registers may be compiled into a program or inserted post-compile by a binary translation system for execution. The simplified hardware logic results in further savings of processor die area and further reduction in processor dynamic capacitance compared to existing predicate register implementations.

### Predicate Register Stack Overview

In various embodiments, predicate values are organized in a register stack. Accordingly, source and destination logical registers are not explicitly referenced by instructions that consume and produce predicate values. Instead, predicate reads and writes address a value at a particular position in the predicate stack relative to a Top-of-Stack (ToS) register. In one embodiment, a reference to a predicate value is made relative to the current ToS value (e.g. ToS, ToS-1, ToS+2). In one embodiment, stack references are made by pushing (e.g., writing) or popping (e.g., reading) values to or from the stack. Depending on the type of push or pop operation, the operation may have a side effect on the ToS value.

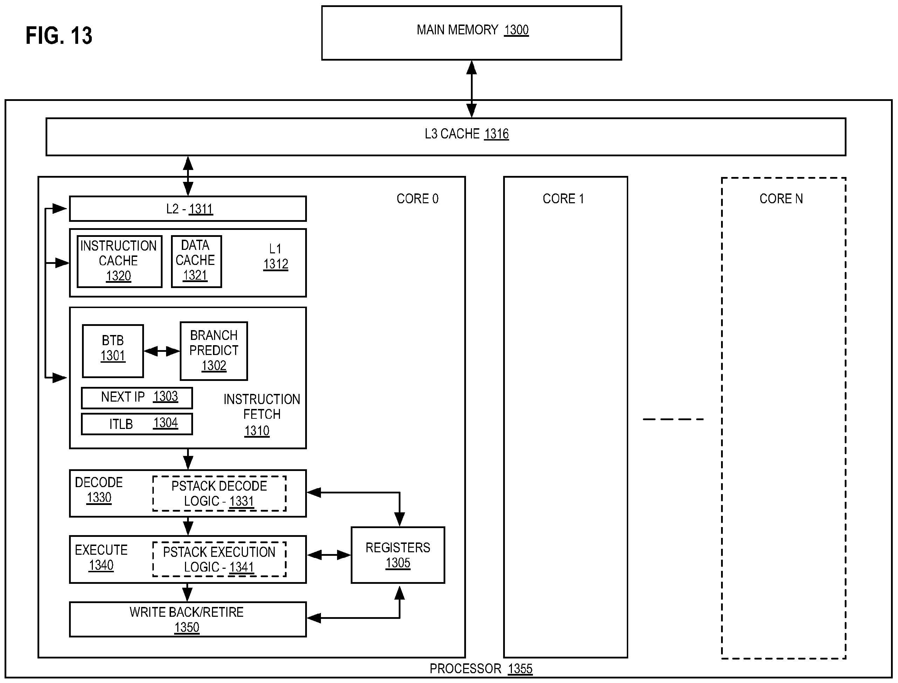

In one embodiment, instructions are provided to explicitly manage and maintain predicate stack state. For example, instructions are provided to maintain a consistent view of predicate stack values after reconvergence of a branch. In one embodiment, predicate stack management functions may be used to maintain the consistency of the predicate stack across the various software control flow paths. As code follows different control flow paths a different number of pushes and pops to the predicate stack may occur. In some circumstances, post reconvergence code may not be able to access pre-divergence predicate values. For example, the position of the post reconvergence code may differ depending on which of the previous control flow paths were taken. Exemplary control flow instructions are described in conjunction with Figures 13-15 below.

### Early Branch Computation and Misprediction Recovery

In one embodiment, a stack-based predication implementation enables an earlier realization of the logical-to-physical mapping of predicate registers within the processor pipeline. Accordingly, an early-computed predicate value may be used to compute the outcome of branch or correct its misprediction before the branch has executed. Doing so with a more traditional organization would be significantly more complex as renaming occurs later in the processor pipeline.

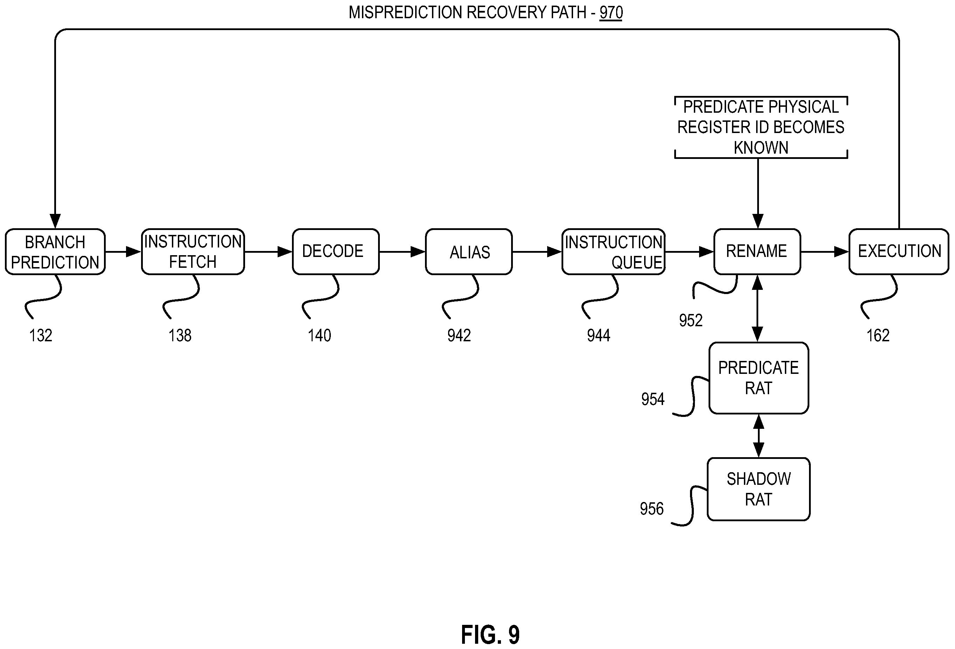

**FIG. 9** is a block diagram of an exemplary pipeline for an out-of-order processor implementing predicate renaming with a register alias table. The register alias table (RAT) is a traditional approach to register renaming. The pipeline illustrated is exemplary, and not intended to illustrate the processor pipeline of any particular processor architecture, but is presented as a general example of a portion of the processing pipeline of an out-of-order register renaming processor. For simplicity, portions of the pipeline are illustrated using components of the exemplary in-order pipeline and an exemplary register renaming out-of-order issue/execution architecture of Figure 1B.

Previously illustrated branch prediction unit 132, instruction fetch unit 138, decode unit 140, and execution unit 162 of Figure 1B are shown. Additionally, an alias component 942, instruction queue component 944, rename component 952, predicate RAT component 954, and shadow RAT component 956 are illustrated. The alias component 942 and rename component 952 may be portions of the rename/allocator unit 152 shown in Figure 1B.The predicate RAT 954 and shadow RAT 956 may reside in one or more of the physical register file(s) unit(s) 158 shown in Figure 1B.

In predication implementations known in the art, the predicate RAT component 954 is implemented as other RATs as known in the art, where a register aliases is generated between a logical register specifier that is explicitly identified by an instruction to one of the physical registers in the a physical register. The logical register specifier is converted to a physical register specifier at the renaming stage of the processor pipeline. During register renaming, a group of instructions enter the renaming component 952. Data dependencies between these instructions are determined and a set of possible source operand physical registers are determined using an alias table (e.g., RAT). During branch speculation, the predicate RAT 954 stores speculative alias information for register renaming. A shadow RAT 956 stores a less speculative shadow state that is used for data recovery in the event of branch misprediction.

During execution, the physical ID of a predicate register is not known until the rename component 952. Accordingly, branch prediction or branch misprediction correction that relies upon knowledge of the physical register ID of a predicate register is delayed. In some instances, the misprediction recovery path 970 may be delayed as late as the execution unit 162. Accordingly, the use of predication in an out-of-order, register-renaming pipeline may result in severe branch misprediction penalties in the rare instances in which branch prediction fails to predict correctly.

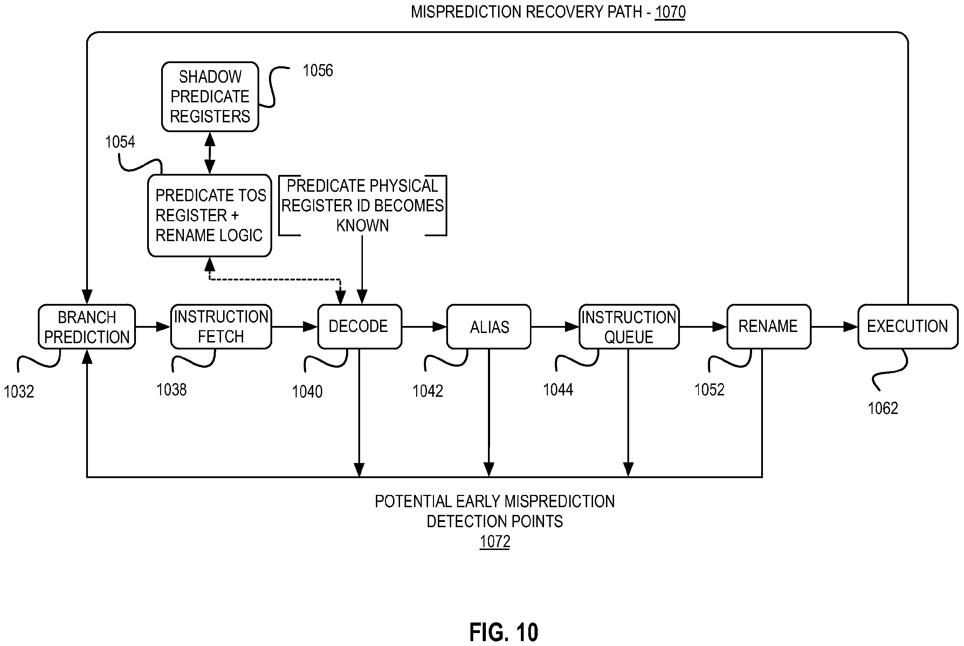

**FIG. 10** is a block diagram of a pipeline for an out-of-order processor implementing a predicate register stack, according to an embodiment. In one embodiment, the stack based predication implementation significantly reduces the misprediction penalty by moving the physical register realization for predicate registers earlier into the processor pipeline.

Illustrated are updated processor components configured to implement an embodiment. The updated components include a branch prediction unit 1032, instruction fetch unit 1038, decode unit 1040, alias component 1042, instruction queue component 1044, rename component 1052, and an execution unit 1062.

The predicate rename operation may be performed as soon as the offset is known, and the rename logic 1054 may be implemented using significantly reduced hardware logic compared to conventional register rename logic. In one embodiment the offset becomes known within the decode unit 1040 during the instruction decode stage of the pipeline. Once the offset is known, the predicate ToS register and rename logic 1054 may determine a predicate physical register ID. Advancing the predicate register rename earlier in the instruction pipeline provides additional opportunities to perform branch misprediction recovery based on previously computed predicate values. Accordingly, while the execution unit 1062 remains a possible node on the misprediction recovery path 1070, early misprediction detection points 1072 may be enabled at one or more of the decode unit 1040, alias component 1042, instruction queue component 1044, or rename component 1052.

In one embodiment a set of shadow predicate registers 1056 are included. In the case of a full or partial pipeline flush as a result of a branch misprediction, the correct ToS physical register identifier may be recovered from one of the shadow predicate registers 1056. In one embodiment, a shadow copy of the ToS identifier is kept at each potential pipeline flush point. For example, one shadow copy is used at commit to handle full pipeline flushes and one additional shadow copy may be held at an earlier point in the pipeline for recovery from a partial pipeline flush, for example, at one of the potential early misprediction detection points 1072.

### Exemplary Predicate Register Stack Implementation

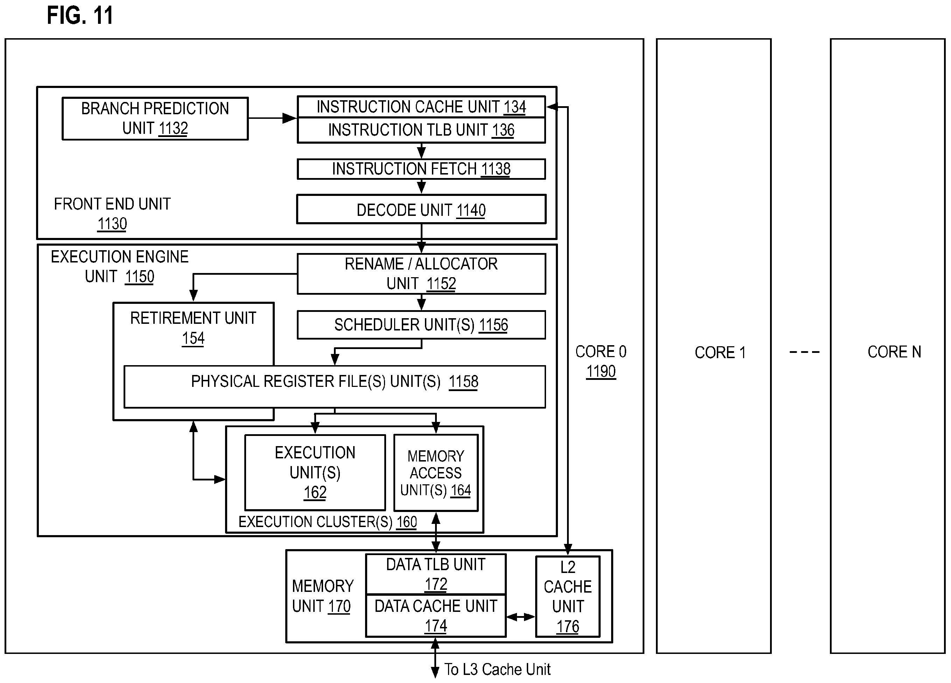

**FIG. 11** is a block diagram of an exemplary processor in which embodiments may be implemented. The details of a single processor core 1190 (e.g., Core 0) are illustrated for simplicity, although other cores (e.g., Cores 1-N may have similar logic). In one embodiment, the processor core 1190 includes processor components illustrated in exemplary processor 190 of **Figure** 1. Additionally, each core may include an enhanced front end unit 1130 including at least an enhanced branch prediction unit 1132, instruction fetch unit 1138 and decode unit 1140. In one embodiment, each core includes an enhanced out-of-order execution engine unit 1150 including a rename/allocator unit 1152, scheduler unit 1156, and physical register file(s) unit(s) 1158.

In one embodiment the processor core 1190 implements the stack-based predicate system of Figure 10. In such embodiment, the branch prediction unit 1032 is implemented in the branch prediction unit 1132. The instruction fetch unit 1038 is implemented in the instruction fetch unit 1138. The decode unit 1040 is implemented in the decode unit 1140. In one embodiment, the alias component 1042 component and rename component 1052 are implemented in the rename/allocator unit 1152. The execution unit 1062 may be any one or more of the execution units(s) 162. The instruction queue 1052 may be implemented as a reservation station within one or more of the scheduler unit(s) 1156.

In one embodiment the ToS register and rename logic 1054 is implemented within or in association with the decode unit 1140. However, early predicate register determination may still be performed (e.g., during the decode stage) if the predicate register hardware is implemented in other components of the processor core. In one embodiment, the ToS register and rename logic 1054 is implemented within the rename/allocator unit 1152 using simplified renaming logic that is accessible by the front end unit 1130. In one embodiment, the predicate TOS register and rename logic 1054 is implemented within one or more of the physical register file(s) units 1158.

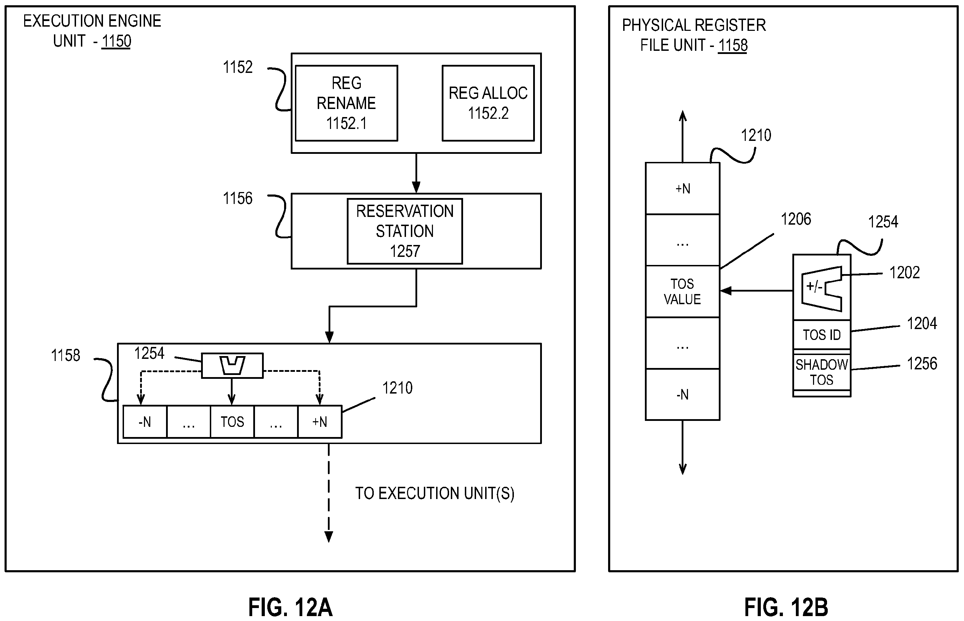

**Figures 12A**-B are a block diagrams of processor components for implementing an embodiment of a predicate register stack. The processor components are illustrated as components of the processor core 1190 of Figure 1190. In particular, Figure 12A shows an execution engine unit 1150 and a physical register file unit 1158. The physical register file unit 1158 may be connected to one or more of the individual execution units (not shown). Figure 12B shows an expanded view of the physical register file unit 1158.

As shown in Figure 12A, in one embodiment a register rename component 1152.1 and register allocation component 1152.2 are included within the rename/allocator unit 1152 of the execution engine unit 1150. A reservation station 1257 within a scheduler unit 1156 may be used to implement the out-of-order instruction queue 1044 of Figure 10. In one embodiment, the physical register file unit 1158 includes the predicate ToS register and rename logic 1254 along with the other physical registers used within the execution engine unit 1150. The predicate ToS register and rename logic 1254 are used to select a register ID of a register within a predicate register set 1210. Registers within the predicate register set 1210 are used for the registers of the predicate register stack.

In one embodiment, each predicate register in the physical predicate register set 1210 is a single bit register configured to hold a single bit predicate value (e.g., 0b1 for true or 0b0 for false). In one embodiment, the predicate register set 1210 if configured from multiple-bit registers (e.g., 16-bit, 32-bit) and the register logic is configured to present single bits of the of the multiple-bit registers as single predicate registers.

Figure 12B shows an expanded view of the physical register file unit 1158. The set of live predicate registers at any given time is the defined as [ToS- MAX_OFFSET, ToS + MAX_OFFSET], where +N and -N in Figures 12A-B illustrate the +MAX_OFFSET and - MAX_OFFSET form the ToS 1206 for the predicate register stack. MAX_OFFSET varies according to embodiments. As predicate values are computed the values are pushed onto the top of the predicate stack (e.g., to the register above the ToS 1206) and the ToS is advanced to the new value.

In one embodiment the predicate register renaming logic 1254 includes a register 1204 to store the register ID of the ToS register and an ALU 1202 to compute a requested offset from the ToS ID. Previously computed predicates are identified relative to a current predicate ToS register (e.g. ToS + 1, ToS - 2 etc.). The logical name of a particular value will change over time. For example, a particular predicate register at ToS will be addressed at ToS-1 after the next predicate value is pushed on to the predicate register stack. Each time the ToS register increases, one of the predicates (e.g., the predicates in the ToS - (MAX_OFFSET + 1) position) moves out of the range of live predicate values. When this occurs, the predicate value in the ToS - (MAX_OFFSET +1) position is considered dead. The physical register associated with that logical register is reclaimed once the logical register is dead.

In the case of a full or partial pipeline flush the correct ToS value is recovered from shadow copies in the shadow ToS registers 1256. In one embodiment a shadow copy is kept at each potential pipeline flush point. In one embodiment, software is developed with the caveat that a predicate value logically outside the [ToS - MAX_OFFSET, ToS + MAX_OFFSET] should not be released if it remains possible to flush the pipeline and roll back the processor state to a point at which that predicate value should still remain valid. In one embodiment, logic is included to prevent a logical register from being released if it may be possible for the register to become live after a rollback of processor state. As the cost of predicate registers is relatively low, in one embodiment the number of physical registers can be kept sufficiently large to limit the likelihood predicate register out of bounds issue. A predicate register stack containing up to 16 live predicate registers is sufficient in one implementation. However, the number of live predicate registers at any one time may be adjusted based on the length of the instruction pipeline of a processor or processor core.

A new predicate value can be computed and pushed onto the stack either explicitly, with some flavor of compare instruction, or implicitly by any instruction that computes a value that can be tested in some way. For example, any existing instruction that modifies an architecture flag may potentially push a predicate value onto the predicate stack. Which architecture flag to use as a predicate value to push or compare for a given instruction can be specified as part of the instruction encoding, can be assumed to always test against 0, or any other condition. In one embodiment, any generated value is always pushed onto the top of the stack. Accordingly, no explicit destination predicate register is specified in the instruction encoding.

In one embodiment the ToS can be assumed to always grow, and an explicit pop instruction is not provided. However, in one embodiment, a pop instruction may be implemented to remove values from the stack and shrink the ToS by the number of popped values. In one embodiment, an implicit pop instruction is provided which moves the ToS to a previous point as a result of a stack synchronization instruction.

### Predicate Register Stack Management Instructions

In a stack-based design, when a program may take different control paths the stack should be in a consistent state when the control paths converge. In other words, the predicate ToS register and any TOS - N references should refer to the same predicate register regardless of which path was taken. If the number of predicate values pushed onto the stack differs between the control flow paths the predicate register stack becomes inconsistent. An exemplary set of instructions that place the predicate register stack into an inconsistent state are shown in Table 1 below.

**Table 1 - Inconsistent Predicate Stack State**

| | |
|---|---|
| **1** | add.p rax, rbx |
| **2** | br.p ToS, predicate_true |
| **predicate_false:** | #execute if predicate is false (e.g., 0) |
| **3** | sub.p rax,rcx |
| **4** | sub.p rax, rdx |
| **5** | br rejoin |
| **predicate_true:** | #execute if predicate is true (e.g., 1) |
| **6** | sub.p rbx, rcx |
| **rejoin:** | |
| **7** | br.p ToS-1, new_target |

In **Table 1** above, one of two branch paths are executed based on the value in the predicate register indicated by ToS at line 2. The predicate_false path pushes two predicate values onto the predicate stack. The predicate_true path pushes one predicate value onto the predicate stack. Accordingly, the branch at line 7 will be evaluated using different predicate values depending on which of the previous branch paths was taken, which is unlikely to be the intended result.

In one embodiment, specialized instructions are included to enable (e.g., a compiler or developer) to maintain stack consistency across branch paths that push differing numbers of predicate values onto the predicate register stack.

### Predicate Stack Push Instruction

In one embodiment, an instruction (e.g., ppush) is provided to explicitly push one or more values onto the predicate stack and advance the ToS as appropriate. Values pushed on the stack may be true or false. In one embodiment, a 'don't-care' value can be pushed. Pushing a don't care value will update the ToS and reuse any existing value that is present in the predicate register without setting a new value. An exemplary set of instructions utilizing a predicate stack push instruction to maintain predicate register stack consistency is shown in **Table 2** below.

**Table 2 - Consistent Predicate Stack State via Stack Push**

| | |
|---|---|
| **1** | add.p rax, rbx |
| **2** | br.p ToS, predicate_true |
| **predicate_false:** | #execute if predicate is false (e.g., 0) |
| **3** | sub.p rax,rcx |
| **4** | sub.p rax, rdx |
| **5** | br rejoin |
| **predicate_true:** | #execute if predicate is true (e.g., 1) |
| **6** | sub.p rbx, rcx |
| **6a** | ppush 0x1 |
| **rejoin:** | |
| **7** | br.p ToS-1, new_target |

In **Table 2** above, an additional 'ppush 0x1' instruction is shown at line 6a. In one embodiment the ppush 0x1 instruction will push a 0x1 value onto the predicate stack and update the ToS to the inserted value. As a result, the number of predicate values pushed on to the stack will be equal in both branches. Accordingly, the branch at line 7 will be evaluated using the same predicate value without regard to previous branch execution. While a push of a single bit is shown (e.g., 0x1), an embodiment enables several bits to be pushed on to the stack based on the bit value of the source operand of the instruction. For example, if the source value is 0x3 (e.g., 0b11), an embodiment pushes two true predicates onto the stack.

### Predicate Stack Queue and Sync instructions

In one embodiment, predicate queue (e.g., pqueue) and predicate sync (e.g., psync) instructions are provided. The pqueue instruction can push an explicit series of one or more predicates onto the stack without advancing the ToS past these values. Thus, when future values are pushed onto the stack, the future values overwrite the values pushed by the pqueue instruction. The pqueue instruction may also save the current position of the ToS for later use by a psync instruction.

The psync instruction, according to an embodiment, moves the ToS to the position it was in prior to a queue instruction (e.g., psync bottom, psync.b) or advances the ToS until it points to the last predicate value written by a prior pqueue instruction (e.g., psync top, psync.t). For example, a psync bottom instruction may be used if none of the predicates computed on the different control flow paths are intended to be live past the branch reconvergence point, resulting in an implicit popping of any values pushed by the pqueue, as well as any other values pushed onto the stack between the pqueue and the psync bottom. To the contrary, a psync top instruction may be used if a variable number of pushes occurred during a branch, and some number of those values are intended to be live past the reconvergence point). An exemplary set of instructions utilizing predicate stack queue and sync instructions to maintain predicate register stack consistency is shown in **Table 3** below.

**Table 3 - Consistent Predicate Stack State via Stack Queue and Sync**

| | |
|---|---|
| **1** | add.p rax, rbx |
| **1a** | pqueue 0x3 |
| **2** | br.p ToS, predicate_true |
| **predicate_false:** | #execute if predicate is false (e.g., 0) |
| **3** | sub.p rax,rcx |
| **4** | sub.p rax, rdx |
| **5** | br rejoin |
| **predicate_true:** | #execute if predicate is true (e.g., 1) |
| **6** | sub.p rbx, rcx |
| **rejoin:** | |
| **6b** | psync.x //either psync.t or psync.b |
| **7** | br.p ToS-1, new_target |

In **Table 3** above, line 1a shows a pqueue instruction to push a value of 0x3 (e.g., 0b11) onto the stack. Accordingly, two true predicate values are pushed. In one embodiment, the pqueue instruction saves the ToS position for later use, but does not update the ToS position to reflect the newly queued values. Because the ToS position is not updated as a result of the pqueue instruction, the reference to the ToS by the br.p instruction at line 2 is a reference to the predicate value pushed by the add.p instruction at line 1. Following the branch at line 2, two values are pushed onto the predicate stack by the instructions at line 3 and 4 or one value is pushed onto the predicate stack by the instruction at line 6. Each push along this branch overwrites the values inserted by the pqueue instruction at line 1a, advancing the stack after each push.

At line 6b, a psync instruction is used to sync the predicate stack. Either one of psync.t or psync.b may be used. The psync.t instruction is used to advance the ToS to the last value written by the immediately previous pqueue instruction. In the code of Table C, pqueue 0x3 at line 1a pushed two predicate values onto the predicate stack. Thus, in one embodiment, a psync.t at line 6a retrieves the previous ToS position and advances the ToS to two positions beyond the previous ToS value, which was stored by the pqueue instruction at line 1a. Alternatively, the psync.b instruction may be used to revert the ToS to the position prior to the pqueue instruction, which essentially discards any predicate values pushed along a previous branch. In either case, a developer or compiler can be certain of the predicate stack state after a branch convergence.

**Figure 13** is a block diagram of a processing system including instructions to manage a predicate stack, according to an embodiment. The exemplary processing system includes a processor 1355 coupled to main memory 1300. The processor 1355 includes a decode unit 1330 with decode logic 1331 for decoding the predicate stack management instructions. Additionally, a processor execution engine unit 1340 includes additional execution logic 1341 for executing the predicate register stack instructions. Registers 1305 provide register storage for operands, control data and other types of data as the execution unit 1340 executes the instruction stream. In one embodiment the registers 1305 also include the physical registers used to implement a logical predicate register stack as described herein.

The details of a single processor core ("Core 0") are illustrated in **Figure 13** for simplicity. It will be understood, however, that each core shown in **Figure 13** may have the same set of logic as Core 0. As illustrated, each core may also include a dedicated Level 1 (L1) cache 1312 and Level 2 (L2) cache 1311 for caching instructions and data according to a specified cache management policy. The L1 cache 1311 includes a separate instruction cache 1320 for storing instructions and a separate data cache 1321 for storing data. The instructions and data stored within the various processor caches are managed at the granularity of cache lines, which may be a fixed size (e.g., 64, 128, 512 Bytes in length). Each core of this exemplary embodiment has an instruction fetch unit 1310 for fetching instructions from main memory 1300 and/or a shared Level 3 (L3) cache 1316; a decode unit 1320 for decoding the instructions; an execution unit 1340 for executing the instructions; and a write back/retire unit 1350 for retiring the instructions and writing back the results.

The instruction fetch unit 1310 includes various well known components including a next instruction pointer 1303 for storing the address of the next instruction to be fetched from memory 1300 (or one of the caches); an instruction translation look-aside buffer (ITLB) 1304 for storing a map of recently used virtual-to-physical instruction addresses to improve the speed of address translation; a branch prediction unit 1302 for speculatively predicting instruction branch addresses; and branch target buffers (BTBs) 1301 for storing branch addresses and target addresses. Once fetched, instructions are then streamed to the remaining stages of the instruction pipeline including the decode unit 1330, the execution unit 1340, and the write back/retire unit 1350.

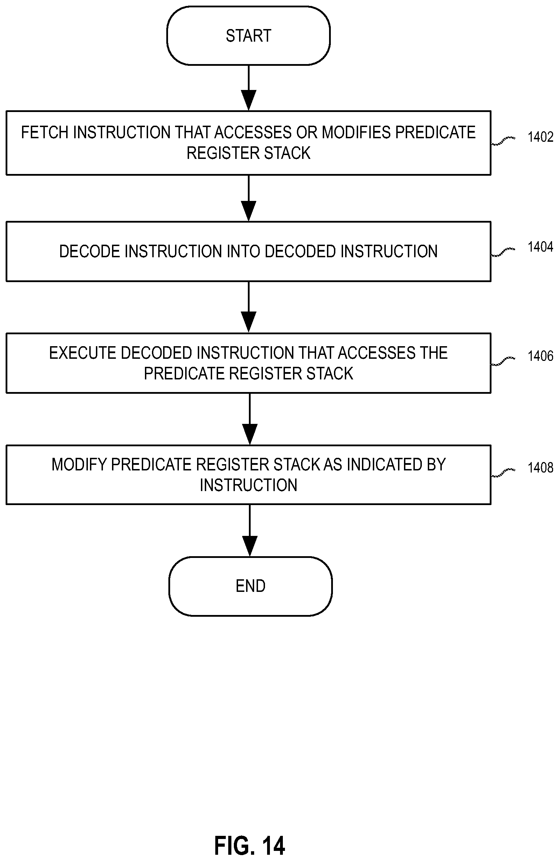

**Figure 14** is a flow diagram for logic to process exemplary predicate stack management instructions, according to an embodiment. At block 1402, the instruction pipeline beings with a fetch of an instruction that modifies or otherwise accesses a predicate register stack. The instruction can be an instruction to modify a predicate register stack or an instruction that modifies the predicate register stack based on a comparison to an architectural status flag, which may or may not be set as a result of a computation performed by the instruction.

At block 1404, the processor decodes the instruction into a decoded instruction. In one embodiment, the decoded instruction is a single operation. In one embodiment the decoded instruction includes one or more logical micro-operations to perform each sub-element of the instruction. The micro-operations can be hard-wired or microcode operations can cause components of the processor, such as an execution unit, to perform various operations to implement the instruction.

At block 1406 an execution unit of the processor executes the decoded instruction to perform an operation that accesses the predicate register stack. In one embodiment the instruction causes a read from a position on the predicate stack specified by an operand including a logical position within the stack (e.g., ToS, ToS-1, ToS+1). In one embodiment the instruction causes a push onto the predicate register stack. For instructions that push values onto the predicate register stack, in one embodiment no explicit destination predicate register is specified in the instruction encoding for instructions to push values onto the predicate stack, as the generated value is pushed onto the top of the stack.

At block 1408 the instruction causes the processor to modify the predicate register stack as indicated by the instruction. In one embodiment, the instruction causes the processor execution unit to generate and push a value onto the predicate register stack based on one or more architecture flags that are set during instruction execution (e.g., carry, zero overflow, negative). In one embodiment the instruction is an instruction to perform an explicit predicate stack management operation. The instruction can perform any number of operations on the predicate stack, including pushing one or more values onto the predicate stack without advancing the ToS value, pushing one or more values onto the predicate stack while advancing the ToS value, or syncing the ToS to position based on a previous predicate stack operation.

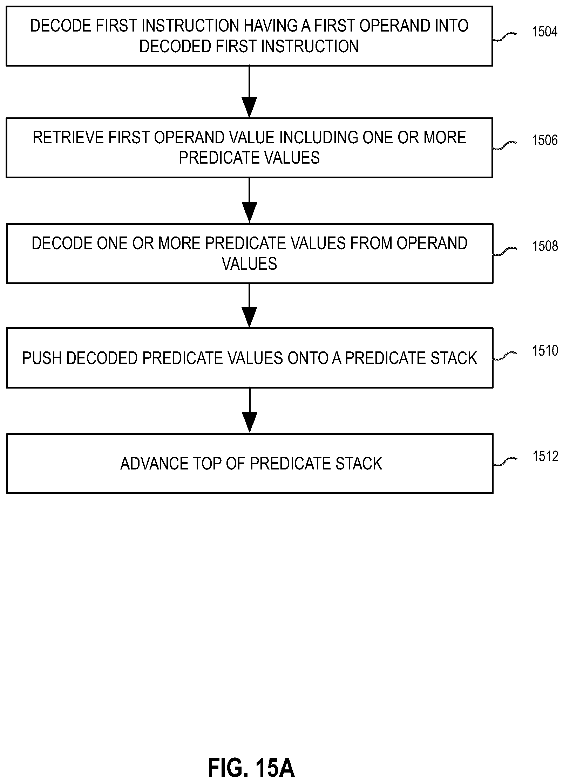

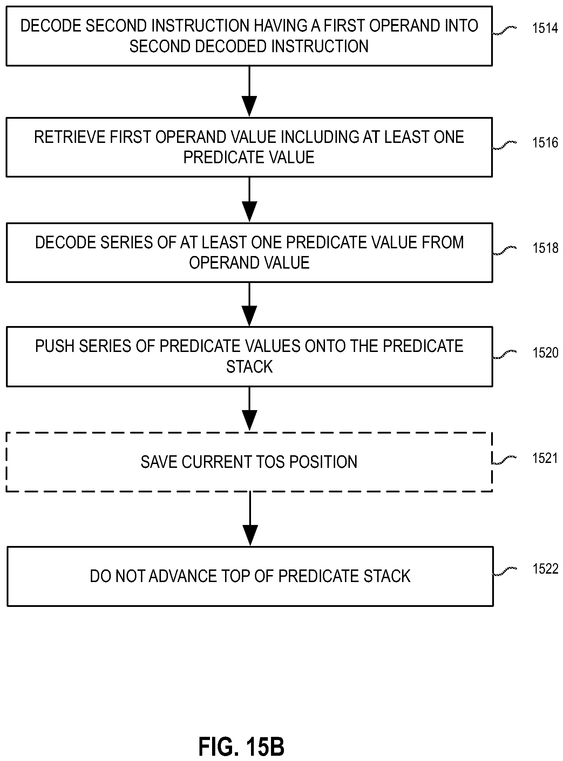

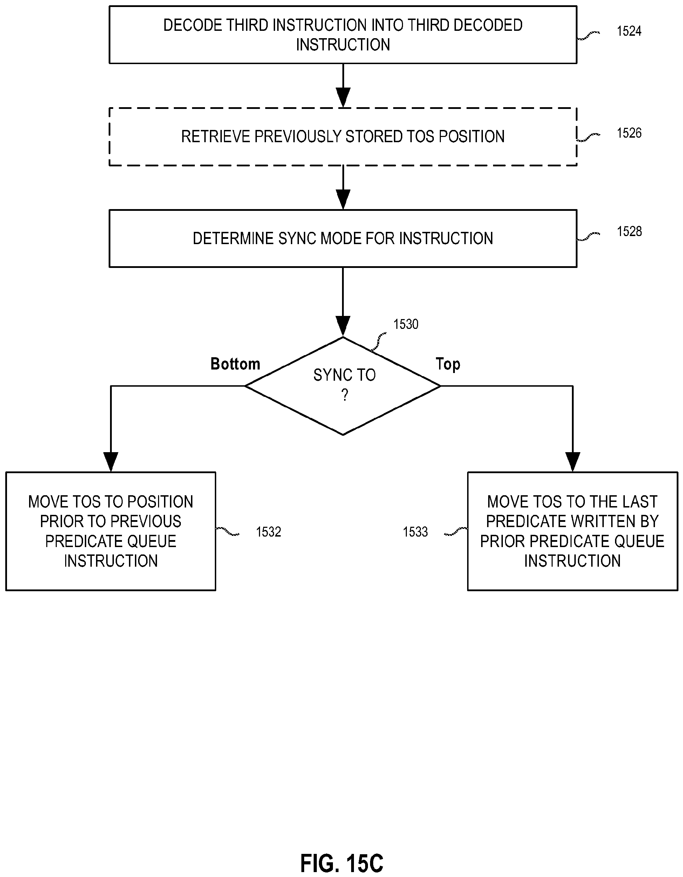

**Figure 15A**-C are flow diagrams for specific predicate stack management instructions, according to embodiments. Figure **15A** shows logic for a predicate stack push instruction (e.g., ppush) according to an embodiment. Figure **15B** shows logic for a predicate stack queue instruction (e.g., pqueue) according to an embodiment. Figure **15C** shows logic for predicate stack sync instructions (e.g., psync.b, psync.t) according to an embodiment. It will be understood that additional instructions to perform explicit predicate stack management may be envisioned that are consistent with the embodiments described herein.

As shown in Figure 15A at block 1504, in one embodiment a decode unit decodes a first instruction (e.g., predicate push instruction) having a first operand into a first decoded instruction. At block 1506, a processor component, such as a processor execution unit, performs operations to retrieve a first operand value for the first operand, where the first operand value includes one or more predicate values. At block 1508 the processor decodes one or more predicate values based on the bits of the operand value. For example, an operand value of 0x4 may be decoded into 0b100, resulting in push of three predicate values (e.g., 0b1, 0b0, and 0b0) onto the predicate stack.

At block 1510 the processor execution logic pushes the decoded predicate values onto the predicate stack. Pushing the predicate values, in one embodiment, makes use of predicate register rename logic to determine a physical register ID associated with logical registers of the predicate stack. At block 1512 the predicate register rename logic is used to advance the top of the predicate stack to the last value pushed on to the predicate register stack.

As shown in Figure 15B at block 1514, in one embodiment a decode unit decodes a second instruction (e.g., predicate queue instruction) having a first operand into a second decoded instruction. At block 1516, a processor component, such as a processor execution unit, performs operations to retrieve a first operand value for the first operand, where the first operand value includes one or more predicate values. At block 1518 the processor decodes a series of at least one predicate value from the operand value.

At block 1520 the processor execution logic pushes the series of predicate values onto the predicate stack. In one embodiment, as shown at block 1521, the predicate queue instruction may explicitly save the current ToS position (e.g., the ToS register ID) for later use by a sync instruction. However, not all embodiments rely on an explicit save of the predicate ToS position by a queue instruction, as other methods of determining the predicate ToS associated with a previous queue instruction may be used. For the second instruction, at block 1512 the predicate queue instruction explicitly does not advance the top of the predicate stack. Thus, predicate values pushed by a predicate queue instruction may be accessed using ToS+N logical identifiers until those values are overwritten by explicit pushes from a predicate push, or pushes from an instruction encoded to push a predicate value onto the predicate stack as an operational result or side effect of the instruction.

As shown in Figure 15C at block 1524, in one embodiment a decode unit decodes a third instruction (e.g., predicate sync instruction). In one embodiment, the third instruction retrieves a previously stored ToS position, as shown at 1526. The previously stored ToS position, in such embodiment, is stored by a previously executed predicate stack queue instruction. However, not all embodiments rely on an explicit save of the predicate ToS position by a queue instruction, as other methods of determining the predicate ToS associated with a previous queue instruction may be used. As shown at block 1528, the processor determines the sync mode for the instruction. In one embodiment the sync mode is determined by the decode unit during instruction decode. In one embodiment the processor determines the sync mode during execution of the predicate sync instruction. As shown at block 1530, the predicate register rename logic syncs the predicate ToS register in 'Bottom' or 'Top' mode based on the type or encoding of the predicate sync instruction. Block 1532 shows the bottom sync operations, where the rename logic moves the ToS to the position prior to a previous predicate queue instruction. Block 1533 shows a top sync operation, where the rename logic moves the ToS to the last predicate written by a prior predicate queue instruction. In one embodiment, moving the ToS to the last predicate written by a prior predicate queue instruction advances the ToS beyond the number of predicate values written during a logical branch. In one embodiment, moving the ToS results in an implicit pop of one or more instructions if more predicate values are pushed during the branch than were pushed by the previous predicate queue instruction.

### Exemplary Instruction Formats

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

A vector friendly instruction format is an instruction format that is suited for vector instructions (e.g., there are certain fields specific to vector operations). While embodiments are described in which both vector and scalar operations are supported through the vector friendly instruction format, alternative embodiments use only vector operations the vector friendly instruction format.

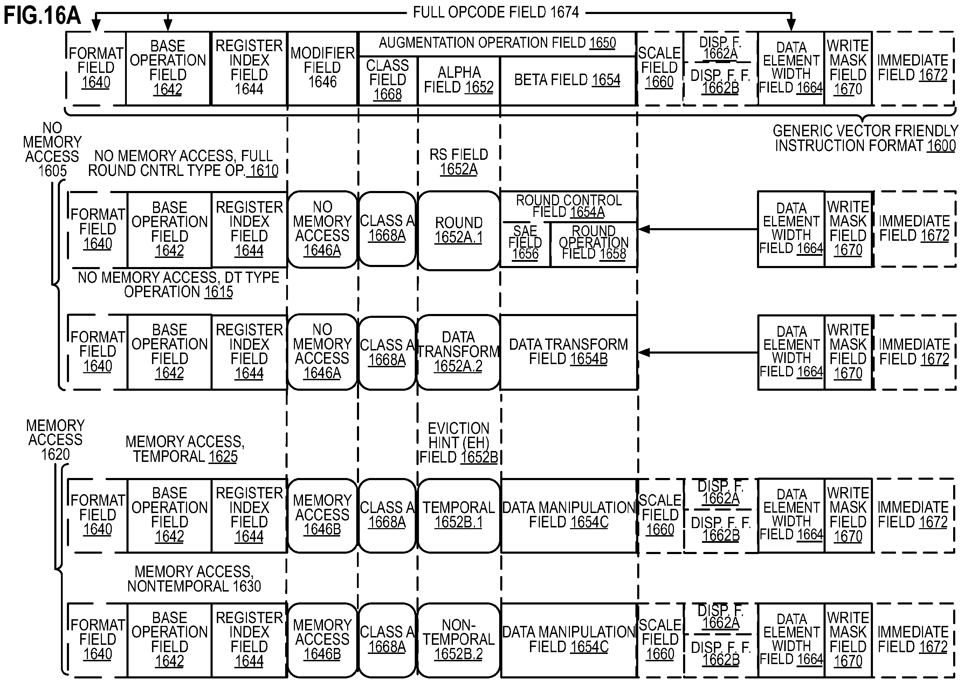

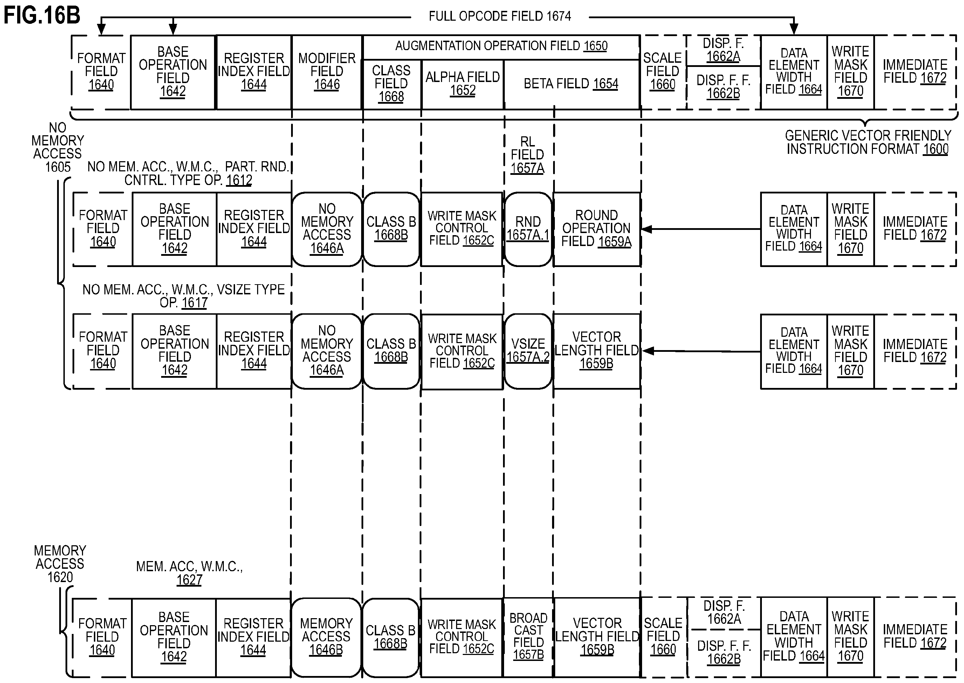

**Figures 16A-16B** are block diagrams illustrating a generic vector friendly instruction format and instruction templates thereof according to an embodiment. Figure 16A is a block diagram illustrating a generic vector friendly instruction format and class A instruction templates thereof according to an embodiment; while Figure 16B is a block diagram illustrating the generic vector friendly instruction format and class B instruction templates thereof according to an embodiment. Specifically, a generic vector friendly instruction format 1600 for which are defined class A and class B instruction templates, both of which include no memory access 1605 instruction templates and memory access 1620 instruction templates. The term generic in the context of the vector friendly instruction format refers to the instruction format not being tied to any specific instruction set.

Embodiments will be described in which the vector friendly instruction format supports the following: a 64 byte vector operand length (or size) with 32 bit (4 byte) or 64 bit (8 byte) data element widths (or sizes) (and thus, a 64 byte vector consists of either 16 doubleword-size elements or alternatively, 8 quadword-size elements); a 64 byte vector operand length (or size) with 16 bit (2 byte) or 8 bit (1 byte) data element widths (or sizes); a 32 byte vector operand length (or size) with 32 bit (4 byte), 64 bit (8 byte), 16 bit (2 byte), or 8 bit (1 byte) data element widths (or sizes); and a 16 byte vector operand length (or size) with 32 bit (4 byte), 64 bit (8 byte), 16 bit (2 byte), or 8 bit (1 byte) data element widths (or sizes). However, alternate embodiments support more, less and/or different vector operand sizes (e.g., 256 byte vector operands) with more, less, or different data element widths (e.g., 128 bit (16 byte) data element widths).

The class A instruction templates in Figure 16A include: 1) within the no memory access 1605 instruction templates there is shown a no memory access, full round control type operation 1610 instruction template and a no memory access, data transform type operation 1615 instruction template; and 2) within the memory access 1620 instruction templates there is shown a memory access, temporal 1625 instruction template and a memory access, non-temporal 1630 instruction template. The class B instruction templates in Figure 16B include: 1) within the no memory access 1605 instruction templates there is shown a no memory access, write mask control, partial round control type operation 1612 instruction template and a no memory access, write mask control, vsize type operation 1617 instruction template; and 2) within the memory access 1620 instruction templates there is shown a memory access, write mask control 1627 instruction template.

The generic vector friendly instruction format 1600 includes the following fields listed below in the order illustrated in Figures 16A-16B.

Format field 1640 - a specific value (an instruction format identifier value) in this field uniquely identifies the vector friendly instruction format, and thus occurrences of instructions in the vector friendly instruction format in instruction streams. As such, this field is optional in the sense that it is not needed for an instruction set that has only the generic vector friendly instruction format.

Base operation field 1642 - its content distinguishes different base operations.

Register index field 1644 - its content, directly or through address generation, specifies the locations of the source and destination operands, be they in registers or in memory. These include a sufficient number of bits to select N registers from a PxQ (e.g. 32x512, 16x128, 32x1024, 64x1024) register file. While in one embodiment N may be up to three sources and one destination register, alternative embodiments may support more or less sources and destination registers (e.g., may support up to two sources where one of these sources also acts as the destination, may support up to three sources where one of these sources also acts as the destination, may support up to two sources and one destination).

Modifier field 1646 - its content distinguishes occurrences of instructions in the generic vector instruction format that specify memory access from those that do not; that is, between no memory access 1605 instruction templates and memory access 1620 instruction templates. Memory access operations read and/or write to the memory hierarchy (in some cases specifying the source and/or destination addresses using values in registers), while non-memory access operations do not (e.g., the source and destinations are registers). While in one embodiment this field also selects between three different ways to perform memory address calculations, alternative embodiments may support more, less, or different ways to perform memory address calculations.

Augmentation operation field 1650 - its content distinguishes which one of a variety of different operations to be performed in addition to the base operation. This field is context specific. In one embodiment of the invention, this field is divided into a class field 1668, an alpha field 1652, and a beta field 1654. The augmentation operation field 1650 allows common groups of operations to be performed in a single instruction rather than 2, 3, or 4 instructions.

Scale field 1660 - its content allows for the scaling of the index field's content for memory address generation (e.g., for address generation that uses 2^{scale ∗} index + base).

Displacement Field 1662A- its content is used as part of memory address generation (e.g., for address generation that uses 2^{scale ∗} index + base + displacement).

Displacement Factor Field 1662B (note that the juxtaposition of displacement field 1662A directly over displacement factor field 1662B indicates one or the other is used) - its content is used as part of address generation; it specifies a displacement factor that is to be scaled by the size of a memory access (N) - where N is the number of bytes in the memory access (e.g., for address generation that uses 2^{scale ∗} index + base + scaled displacement). Redundant low-order bits are ignored and hence, the displacement factor field's content is multiplied by the memory operands total size (N) in order to generate the final displacement to be used in calculating an effective address. The value of N is determined by the processor hardware at runtime based on the full opcode field 1674 (described later herein) and the data manipulation field 1654C. The displacement field 1662A and the displacement factor field 1662B are optional in the sense that they are not used for the no memory access 1605 instruction templates and/or different embodiments may implement only one or none of the two.

Data element width field 1664 - its content distinguishes which one of a number of data element widths is to be used (in some embodiments for all instructions; in other embodiments for only some of the instructions). This field is optional in the sense that it is not needed if only one data element width is supported and/or data element widths are supported using some aspect of the opcodes.

Write mask field 1670 - its content controls, on a per data element position basis, whether that data element position in the destination vector operand reflects the result of the base operation and augmentation operation. Class A instruction templates support merging-writemasking, while class B instruction templates support both merging- and zeroing-writemasking. When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the write mask field 1670 allows for partial vector operations, including loads, stores, arithmetic, logical, etc. While embodiments are described in which the write mask field's 1670 content selects one of a number of write mask registers that contains the write mask to be used (and thus the write mask field's 1670 content indirectly identifies that masking to be performed), alternative embodiments instead or additional allow the mask write field's 1670 content to directly specify the masking to be performed.

Immediate field 1672 - its content allows for the specification of an immediate. This field is optional in the sense that is it not present in an implementation of the generic vector friendly format that does not support immediate and it is not present in instructions that do not use an immediate.

Class field 1668 - its content distinguishes between different classes of instructions. With reference to Figures 16A-B, the contents of this field select between class A and class B instructions. In Figures 16A-B, rounded corner squares are used to indicate a specific value is present in a field (e.g., class A 1668A and class B 1668B for the class field 1668 respectively in Figures 16A-B).

### Instruction Templates of Class A

In the case of the non-memory access 1605 instruction templates of class A, the alpha field 1652 is interpreted as an RS field 1652A, whose content distinguishes which one of the different augmentation operation types are to be performed (e.g., round 1652A.1 and data transform 1652A.2 are respectively specified for the no memory access, round type operation 1610 and the no memory access, data transform type operation 1615 instruction templates), while the beta field 1654 distinguishes which of the operations of the specified type is to be performed. In the no memory access 1605 instruction templates, the scale field 1660, the displacement field 1662A, and the displacement scale filed 1662B are not present.

### No-Memory Access Instruction Templates - Full Round Control Type Operation

In the no memory access full round control type operation 1610 instruction template, the beta field 1654 is interpreted as a round control field 1654A, whose content(s) provide static rounding. While in the described embodiments the round control field 1654A includes a suppress all floating point exceptions (SAE) field 1656 and a round operation control field 1658, alternative embodiments may support may encode both these concepts into the same field or only have one or the other of these concepts/fields (e.g., may have only the round operation control field 1658).

SAE field 1656 - its content distinguishes whether or not to disable the exception event reporting; when the SAE field's 1656 content indicates suppression is enabled, a given instruction does not report any kind of floating-point exception flag and does not raise any floating point exception handler.

Round operation control field 1658 - its content distinguishes which one of a group of rounding operations to perform (e.g., Round-up, Round-down, Round-towards-zero and Round-to-nearest). Thus, the round operation control field 1658 allows for the changing of the rounding mode on a per instruction basis. In one embodiment of the invention where a processor includes a control register for specifying rounding modes, the round operation control field's 1650 content overrides that register value.

### No Memory Access Instruction Templates - Data Transform Type Operation

In the no memory access data transform type operation 1615 instruction template, the beta field 1654 is interpreted as a data transform field 1654B, whose content distinguishes which one of a number of data transforms is to be performed (e.g., no data transform, swizzle, broadcast).

In the case of a memory access 1620 instruction template of class A, the alpha field 1652 is interpreted as an eviction hint field 1652B, whose content distinguishes which one of the eviction hints is to be used (in Figure 16A, temporal 1652B. 1 and non-temporal 1652B.2 are respectively specified for the memory access, temporal 1625 instruction template and the memory access, non-temporal 1630 instruction template), while the beta field 1654 is interpreted as a data manipulation field 1654C, whose content distinguishes which one of a number of data manipulation operations (also known as primitives) is to be performed (e.g., no manipulation; broadcast; up conversion of a source; and down conversion of a destination). The memory access 1620 instruction templates include the scale field 1660, and optionally the displacement field 1662A or the displacement scale field 1662B.

Vector memory instructions perform vector loads from and vector stores to memory, with conversion support. As with regular vector instructions, vector memory instructions transfer data from/to memory in a data element-wise fashion, with the elements that are actually transferred is dictated by the contents of the vector mask that is selected as the write mask.

### Memory Access Instruction Templates - Temporal

Temporal data is data likely to be reused soon enough to benefit from caching. This is, however, a hint, and different processors may implement it in different ways, including ignoring the hint entirely.

### Memory Access Instruction Templates - Non-Temporal

Non-temporal data is data unlikely to be reused soon enough to benefit from caching in the 1st-level cache and should be given priority for eviction. This is, however, a hint, and different processors may implement it in different ways, including ignoring the hint entirely.

### Instruction Templates of Class B

In the case of the instruction templates of class B, the alpha field 1652 is interpreted as a write mask control (Z) field 1652C, whose content distinguishes whether the write masking controlled by the write mask field 1670 should be a merging or a zeroing.

In the case of the non-memory access 1605 instruction templates of class B, part of the beta field 1654 is interpreted as an RL field 1657A, whose content distinguishes which one of the different augmentation operation types are to be performed (e.g., round 1657A.1 and vector length (VSIZE) 1657A.2 are respectively specified for the no memory access, write mask control, partial round control type operation 1612 instruction template and the no memory access, write mask control, VSIZE type operation 1617 instruction template), while the rest of the beta field 1654 distinguishes which of the operations of the specified type is to be performed. In the no memory access 1605 instruction templates, the scale field 1660, the displacement field 1662A, and the displacement scale filed 1662B are not present.

In the no memory access, write mask control, partial round control type operation 1610 instruction template, the rest of the beta field 1654 is interpreted as a round operation field 1659A and exception event reporting is disabled (a given instruction does not report any kind of floating-point exception flag and does not raise any floating point exception handler).

Round operation control field 1659A -just as round operation control field 1658, its content distinguishes which one of a group of rounding operations to perform (e.g., Round-up, Round-down, Round-towards-zero and Round-to-nearest). Thus, the round operation control field 1659A allows for the changing of the rounding mode on a per instruction basis. In one embodiment of the invention where a processor includes a control register for specifying rounding modes, the round operation control field's 1650 content overrides that register value.

In the no memory access, write mask control, VSIZE type operation 1617 instruction template, the rest of the beta field 1654 is interpreted as a vector length field 1659B, whose content distinguishes which one of a number of data vector lengths is to be performed on (e.g., 128, 256, or 512 byte).

In the case of a memory access 1620 instruction template of class B, part of the beta field 1654 is interpreted as a broadcast field 1657B, whose content distinguishes whether or not the broadcast type data manipulation operation is to be performed, while the rest of the beta field 1654 is interpreted the vector length field 1659B. The memory access 1620 instruction templates include the scale field 1660, and optionally the displacement field 1662A or the displacement scale field 1662B.

With regard to the generic vector friendly instruction format 1600, a full opcode field 1674 is shown including the format field 1640, the base operation field 1642, and the data element width field 1664. While one embodiment is shown where the full opcode field 1674 includes all of these fields, the full opcode field 1674 includes less than all of these fields in embodiments that do not support all of them. The full opcode field 1674 provides the operation code (opcode).

The augmentation operation field 1650, the data element width field 1664, and the write mask field 1670 allow these features to be specified on a per instruction basis in the generic vector friendly instruction format.

The combination of write mask field and data element width field create typed instructions in that they allow the mask to be applied based on different data element widths.

The various instruction templates found within class A and class B are beneficial in different situations. In some embodiments, different processors or different cores within a processor may support only class A, only class B, or both classes. For instance, a high performance general purpose out-of-order core intended for general-purpose computing may support only class B, a core intended primarily for graphics and/or scientific (throughput) computing may support only class A, and a core intended for both may support both (of course, a core that has some mix of templates and instructions from both classes but not all templates and instructions from both classes is within the purview of the invention). Also, a single processor may include multiple cores, all of which support the same class or in which different cores support different class. For instance, in a processor with separate graphics and general purpose cores, one of the graphics cores intended primarily for graphics and/or scientific computing may support only class A, while one or more of the general purpose cores may be high performance general purpose cores with out of order execution and register renaming intended for general-purpose computing that support only class B. Another processor that does not have a separate graphics core, may include one more general purpose in-order or out-of-order cores that support both class A and class B. Of course, features from one class may also be implement in the other class in different embodiments. Programs written in a high level language would be put (e.g., just in time compiled or statically compiled) into an variety of different executable forms, including: 1) a form having only instructions of the class(es) supported by the target processor for execution; or 2) a form having alternative routines written using different combinations of the instructions of all classes and having control flow code that selects the routines to execute based on the instructions supported by the processor which is currently executing the code.

### Exemplary Specific Vector Friendly Instruction Format

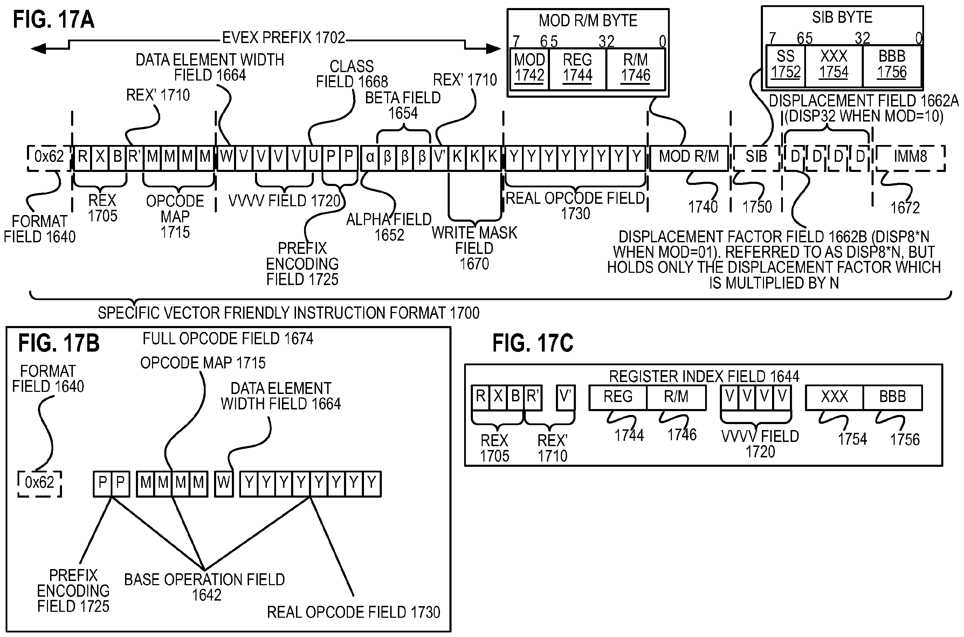

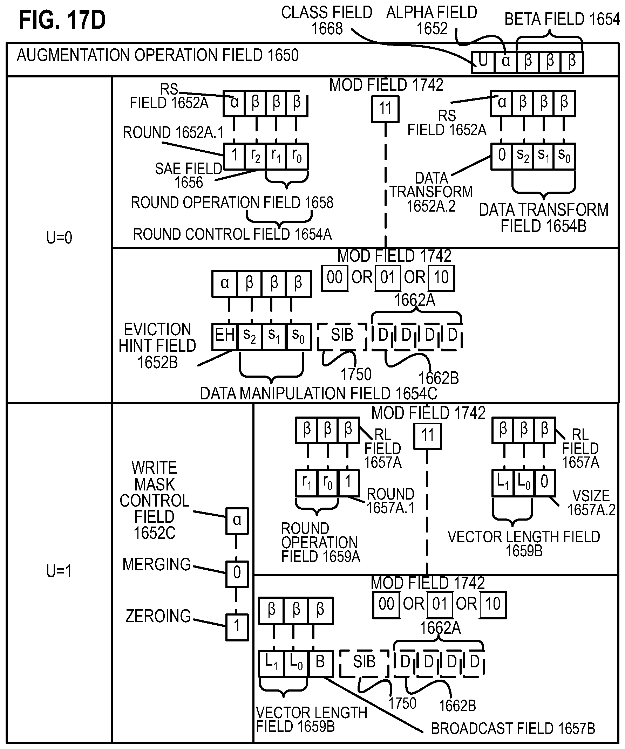

**Figure 17** is a block diagram illustrating an exemplary specific vector friendly instruction format according to an embodiment. Figure 17 shows a specific vector friendly instruction format 1700 that is specific in the sense that it specifies the location, size, interpretation, and order of the fields, as well as values for some of those fields. The specific vector friendly instruction format 1700 may be used to extend the x86 instruction set, and thus some of the fields are similar or the same as those used in the existing x86 instruction set and extension thereof (e.g., AVX). This format remains consistent with the prefix encoding field, real opcode byte field, MOD R/M field, SIB field, displacement field, and immediate fields of the existing x86 instruction set with extensions. The fields from Figure 16 into which the fields from Figure 17 map are illustrated.

It should be understood that, although embodiments are described with reference to the specific vector friendly instruction format 1700 in the context of the generic vector friendly instruction format 1600 for illustrative purposes, the invention is not limited to the specific vector friendly instruction format 1700 except where claimed. For example, the generic vector friendly instruction format 1600 contemplates a variety of possible sizes for the various fields, while the specific vector friendly instruction format 1700 is shown as having fields of specific sizes. By way of specific example, while the data element width field 1664 is illustrated as a one bit field in the specific vector friendly instruction format 1700, the invention is not so limited (that is, the generic vector friendly instruction format 1600 contemplates other sizes of the data element width field 1664).

The generic vector friendly instruction format 1600 includes the following fields listed below in the order illustrated in Figure 17A.

EVEX Prefix (Bytes 0-3) 1702 - is encoded in a four-byte form.

Format Field 1640 (EVEX Byte 0, bits [7:0]) - the first byte (EVEX Byte 0) is the format field 1640 and it contains 0x62 (the unique value used for distinguishing the vector friendly instruction format in one embodiment of the invention).

The second-fourth bytes (EVEX Bytes 1-3) include a number of bit fields providing specific capability.

REX field 1705 (EVEX Byte 1, bits [7-5]) - consists of a EVEX.R bit field (EVEX Byte 1, bit [7] - R), EVEX.X bit field (EVEX byte 1, bit [6] - X), and 1657BEX byte 1, bit[5] - B). The EVEX.R, EVEX.X, and EVEX.B bit fields provide the same functionality as the corresponding VEX bit fields, and are encoded using Is complement form, i.e. ZMMO is encoded as 1111B, ZMM15 is encoded as 0000B. Other fields of the instructions encode the lower three bits of the register indexes as is known in the art (rrr, xxx, and bbb), so that Rrrr, Xxxx, and Bbbb may be formed by adding EVEX.R, EVEX.X, and EVEX.B.

REX' field 1610 - this is the first part of the REX' field 1610 and is the EVEX.R' bit field (EVEX Byte 1, bit [4] - R') that is used to encode either the upper 16 or lower 16 of the extended 32 register set. In one embodiment of the invention, this bit, along with others as indicated below, is stored in bit inverted format to distinguish (in the well-known x86 32-bit mode) from the BOUND instruction, whose real opcode byte is 62, but does not accept in the MOD R/M field (described below) the value of 11 in the MOD field; alternative embodiments do not store this and the other indicated bits below in the inverted format. A value of 1 is used to encode the lower 16 registers. In other words, R'Rrrr is formed by combining EVEX.R', EVEX.R, and the other RRR from other fields.

Opcode map field 1715 (EVEX byte 1, bits [3:0] - mmmm) - its content encodes an implied leading opcode byte (0F, 0F 38, or 0F 3).

Data element width field 1664 (EVEX byte 2, bit [7] - W) - is represented by the notation EVEX.W. EVEX.W is used to define the granularity (size) of the datatype (either 32-bit data elements or 64-bit data elements).

EVEX.vvvv 1720 (EVEX Byte 2, bits [6:3]-vvvv)- the role of EVEX.vvvv may include the following: 1) EVEX.vvvv encodes the first source register operand, specified in inverted (Is complement) form and is valid for instructions with 2 or more source operands; 2) EVEX.vvvv encodes the destination register operand, specified in Is complement form for certain vector shifts; or 3) EVEX.vvvv does not encode any operand, the field is reserved and should contain 1111b. Thus, EVEX.vvvv field 1720 encodes the 4 low-order bits of the first source register specifier stored in inverted (Is complement) form. Depending on the instruction, an extra different EVEX bit field is used to extend the specifier size to 32 registers.

EVEX.U 1668 Class field (EVEX byte 2, bit [2]-U) - If EVEX.U = 0, it indicates class A or EVEX.UO; if EVEX.U = 1, it indicates class B or EVEX.U1.

Prefix encoding field 1725 (EVEX byte 2, bits [1:0]-pp) - provides additional bits for the base operation field. In addition to providing support for the legacy SSE instructions in the EVEX prefix format, this also has the benefit of compacting the SIMD prefix (rather than requiring a byte to express the SIMD prefix, the EVEX prefix requires only 2 bits). In one embodiment, to support legacy SSE instructions that use a SIMD prefix (66H, F2H, F3H) in both the legacy format and in the EVEX prefix format, these legacy SIMD prefixes are encoded into the SIMD prefix encoding field; and at runtime are expanded into the legacy SIMD prefix prior to being provided to the decoder's PLA (so the PLA can execute both the legacy and EVEX format of these legacy instructions without modification). Although newer instructions could use the EVEX prefix encoding field's content directly as an opcode extension, certain embodiments expand in a similar fashion for consistency but allow for different meanings to be specified by these legacy SIMD prefixes. An alternative embodiment may redesign the PLA to support the 2 bit SIMD prefix encodings, and thus not require the expansion.

Alpha field 1652 (EVEX byte 3, bit [7] - EH; also known as EVEX.EH, EVEX.rs, EVEX.RL, EVEX.write mask control, and EVEX.N; also illustrated with α) - as previously described, this field is context specific.

Beta field 1654 (EVEX byte 3, bits [6:4]-SSS, also known as EVEX.s₂₋₀, EVEX.r₂₋₀, EVEX.rr1, EVEX.LLO, EVEX.LLB; also illustrated with βββ) - as previously described, this field is context specific.

REX' field 1610 - this is the remainder of the REX' field and is the EVEX.V' bit field (EVEX Byte 3, bit [3] - V') that may be used to encode either the upper 16 or lower 16 of the extended 32 register set. This bit is stored in bit inverted format. A value of 1 is used to encode the lower 16 registers. In other words, V'VVVV is formed by combining EVEX.V', EVEX.vvvv.

Write mask field 1670 (EVEX byte 3, bits [2:0]-kkk) - its content specifies the index of a register in the write mask registers as previously described. In one embodiment of the invention, the specific value EVEX.kkk=000 has a special behavior implying no write mask is used for the particular instruction (this may be implemented in a variety of ways including the use of a write mask hardwired to all ones or hardware that bypasses the masking hardware).

Real Opcode Field 1730 (Byte 4) is also known as the opcode byte. Part of the opcode is specified in this field.

MOD R/M Field 1740 (Byte 5) includes MOD field 1742, Reg field 1744, and R/M field 1746. As previously described, the MOD field's 1742 content distinguishes between memory access and non-memory access operations. The role of Reg field 1744 can be summarized to two situations: encoding either the destination register operand or a source register operand, or be treated as an opcode extension and not used to encode any instruction operand. The role of R/M field 1746 may include the following: encoding the instruction operand that references a memory address, or encoding either the destination register operand or a source register operand.

Scale, Index, Base (SIB) Byte (Byte 6) - As previously described, the scale field's 1650 content is used for memory address generation. SIB.xxx 1754 and SIB.bbb 1756 - the contents of these fields have been previously referred to with regard to the register indexes Xxxx and Bbbb.

Displacement field 1662A (Bytes 7-10) - when MOD field 1742 contains 10, bytes 7-10 are the displacement field 1662A, and it works the same as the legacy 32-bit displacement (disp32) and works at byte granularity.

Displacement factor field 1662B (Byte 7) - when MOD field 1742 contains 01, byte 7 is the displacement factor field 1662B. The location of this field is that same as that of the legacy x86 instruction set 8-bit displacement (disp8), which works at byte granularity. Since disp8 is sign extended, it can only address between -128 and 127 bytes offsets; in terms of 64 byte cache lines, disp8 uses 8 bits that can be set to only four really useful values -128, -64, 0, and 64; since a greater range is often needed, disp32 is used; however, disp32 requires 4 bytes. In contrast to disp8 and disp32, the displacement factor field 1662B is a reinterpretation of disp8; when using displacement factor field 1662B, the actual displacement is determined by the content of the displacement factor field multiplied by the size of the memory operand access (N). This type of displacement is referred to as disp8^{∗}N. This reduces the average instruction length (a single byte of used for the displacement but with a much greater range). Such compressed displacement is based on the assumption that the effective displacement is multiple of the granularity of the memory access, and hence, the redundant low-order bits of the address offset do not need to be encoded. In other words, the displacement factor field 1662B substitutes the legacy x86 instruction set 8-bit displacement. Thus, the displacement factor field 1662B is encoded the same way as an x86 instruction set 8-bit displacement (so no changes in the ModRM/SIB encoding rules) with the only exception that disp8 is overloaded to disp8^{∗}N. In other words, there are no changes in the encoding rules or encoding lengths but only in the interpretation of the displacement value by hardware (which needs to scale the displacement by the size of the memory operand to obtain a byte-wise address offset).

Immediate field 1672 operates as previously described.

### Full Opcode Field

Figure 17B is a block diagram illustrating the fields of the specific vector friendly instruction format 1700 that make up the full opcode field 1674 according to one embodiment of the invention. Specifically, the full opcode field 1674 includes the format field 1640, the base operation field 1642, and the data element width (W) field 1664. The base operation field 1642 includes the prefix encoding field 1725, the opcode map field 1715, and the real opcode field 1730.

### Register Index Field

Figure 17C is a block diagram illustrating the fields of the specific vector friendly instruction format 1700 that make up the register index field 1644 according to one embodiment of the invention. Specifically, the register index field 1644 includes the REX field 1705, the REX' field 1710, the MODR/M.reg field 1744, the MODR/M.r/m field 1746, the VVVV field 1720, xxx field 1754, and the bbb field 1756.

### Augmentation Operation Field

Figure 17D is a block diagram illustrating the fields of the specific vector friendly instruction format 1700 that make up the augmentation operation field 1650 according to one embodiment of the invention. When the class (U) field 1668 contains 0, it signifies EVEX.U0 (class A 1668A); when it contains 1, it signifies EVEX.U1 (class B 1668B). When U=0 and the MOD field 1742 contains 11 (signifying a no memory access operation), the alpha field 1652 (EVEX byte 3, bit [7] - EH) is interpreted as the rs field 1652A. When the rs field 1652A contains a 1 (round 1652A. 1), the beta field 1654 (EVEX byte 3, bits [6:4]- SSS) is interpreted as the round control field 1654A. The round control field 1654A includes a one bit SAE field 1656 and a two bit round operation field 1658. When the rs field 1652A contains a 0 (data transform 1652A.2), the beta field 1654 (EVEX byte 3, bits [6:4]- SSS) is interpreted as a three bit data transform field 1654B. When U=0 and the MOD field 1742 contains 00, 01, or 10 (signifying a memory access operation), the alpha field 1652 (EVEX byte 3, bit [7] - EH) is interpreted as the eviction hint (EH) field 1652B and the beta field 1654 (EVEX byte 3, bits [6:4]- SSS) is interpreted as a three bit data manipulation field 1654C.

When U=1, the alpha field 1652 (EVEX byte 3, bit [7] - EH) is interpreted as the write mask control (Z) field 1652C. When U=1 and the MOD field 1742 contains 11 (signifying a no memory access operation), part of the beta field 1654 (EVEX byte 3, bit [4]- S₀) is interpreted as the RL field 1657A; when it contains a 1 (round 1657A.1) the rest of the beta field 1654 (EVEX byte 3, bit [6-5]- S₂-₁) is interpreted as the round operation field 1659A, while when the RL field 1657A contains a 0 (VSIZE 1657.A2) the rest of the beta field 1654 (EVEX byte 3, bit [6-5]- S₂-₁) is interpreted as the vector length field 1659B (EVEX byte 3, bit [6-5]- L₁₋₀). When U=1 and the MOD field 1742 contains 00, 01, or 10 (signifying a memory access operation), the beta field 1654 (EVEX byte 3, bits [6:4]- SSS) is interpreted as the vector length field 1659B (EVEX byte 3, bit [6-5]- L₁₋₀) and the broadcast field 1657B (EVEX byte 3, bit [4]-B).

### Exemplary Register Architecture

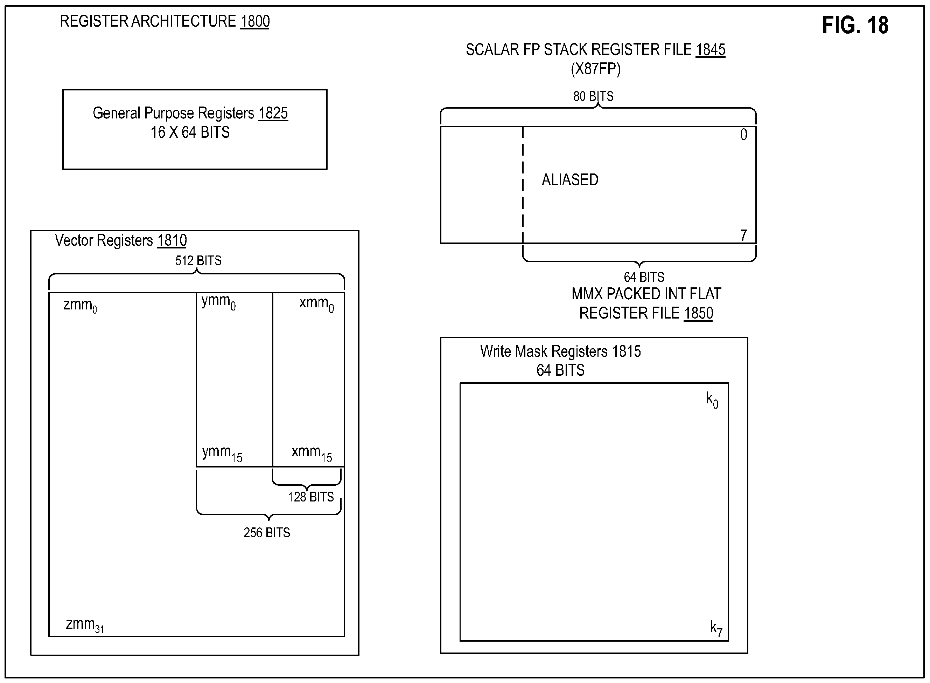

**Figure 18** is a block diagram of a register architecture 1800 according to one embodiment of the invention. In the embodiment illustrated, there are 32 vector registers 1810 that are 512 bits wide; these registers are referenced as zmm0 through zmm31. The lower order 256 bits of the lower 16 zmm registers are overlaid on registers ymm0-16. The lower order 128 bits of the lower 16 zmm registers (the lower order 128 bits of the ymm registers) are overlaid on registers xmm0-15. The specific vector friendly instruction format 1700 operates on these overlaid register file as illustrated in **Table 4** below.

**Table 4 - Registers**

| **Adjustable Vector Length** | **Class** | **Operations** | **Registers** |
|---|---|---|---|
| Instruction Templates that do not include the vector length field 1659B | A (Figure 16A; U=0) | 1610, 1615, 1625, 1630 | zmm registers (the vector length is 64 byte) |
| | B (Figure 16B; U=l) | 1612 | zmm registers (the vector length is 64 byte) |
| Instruction Templates that do include the vector length field 1659B | B (Figure 16B; U=l) | 1617, 1627 | zmm, ymm, or xmm registers (the vector length is 64 byte, 32 byte, or 16 byte) depending on the vector length field 1659B |

In other words, the vector length field 1659B selects between a maximum length and one or more other shorter lengths, where each such shorter length is half the length of the preceding length; and instructions templates without the vector length field 1659B operate on the maximum vector length. Further, in one embodiment, the class B instruction templates of the specific vector friendly instruction format 1700 operate on packed or scalar single/double-precision floating point data and packed or scalar integer data. Scalar operations are operations performed on the lowest order data element position in an zmm/ymm/xmm register; the higher order data element positions are either left the same as they were prior to the instruction or zeroed depending on the embodiment.

Write mask registers 1815 - in the embodiment illustrated, there are 8 write mask registers (k0 through k7), each 64 bits in size. In an alternate embodiment, the write mask registers 1815 are 16 bits in size. As previously described, in one embodiment of the invention, the vector mask register k0 cannot be used as a write mask; when the encoding that would normally indicate k0 is used for a write mask, it selects a hardwired write mask of OxFFFF, effectively disabling write masking for that instruction.

General-purpose registers 1825 - in the embodiment illustrated, there are sixteen 64-bit general-purpose registers that are used along with the existing x86 addressing modes to address memory operands. These registers are referenced by the names RAX, RBX, RCX, RDX, RBP, RSI, RDI, RSP, and R8 through R15.

Scalar floating point stack register file (x87 stack) 1845, on which is aliased the MMX packed integer flat register file 1850 - in the embodiment illustrated, the x87 stack is an eight-element stack used to perform scalar floating-point operations on 32/64/80-bit floating point data using the x87 instruction set extension; while the MMX registers are used to perform operations on 64-bit packed integer data, as well as to hold operands for some operations performed between the MMX and XMM registers.

Alternative embodiments may use wider or narrower registers. Additionally, alternative embodiments may use more, less, or different register files and registers.

In the foregoing specification, the invention has been described with reference to specific exemplary embodiments thereof. It will, however, be evident that various modifications and changes may be made thereto without departing from the scope of the invention as set forth in the appended claims. The specification and drawings are, accordingly, to be regarded in an illustrative rather than a restrictive sense.

Described herein is a system of one or more computers that can be configuired to perform particular operations or actions by virtue of having software, firmware, hardware, or a combination thereof installed on the system to cause the system to perform the actions. In one embodiment, a processing apparatus includes decode logic to decode a first instruction into a decoded first instruction, the decoded instruction including a first operand, and an execution unit to execute the decoded first instruction to access a predicate value on a predicate register stack.

In one embodiment a machine-readable medium stores data which if performed by at least one machine, causes the at least one machine to fabricate at least one integrated circuit to perform operations including decoding an instruction into a decoded first instruction, retrieving a first predicate value from a predicate register stack, and conditionally executing the decoded first instruction based on the first predicate value.

In one embodiment a processor implements an instruction to cause the processor to perform a method comprising decoding an instruction having a first operand into a decoded first instruction, retrieving a first operand value including one or more predicate values; and pushing the one or more predicate values to a location in a predicate stack indicated by a top of stack identifier.

The instructions described herein refer to specific configurations of hardware, such as application specific integrated circuits (ASICs), configured to perform certain operations or having a predetermined functionality. Such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more busses and bridges (also termed as bus controllers). The storage device and signals carrying the network traffic respectively represent one or more machine-readable storage media and machine-readable communication media. Thus, the storage device of a given electronic device typically stores code and/or data for execution on the set of one or more processors of that electronic device.

Throughout this detailed description, for the purposes of explanation, numerous specific details were set forth in order to provide a thorough understanding of the present invention. It will be apparent, however, to one skilled in the art that the invention may be practiced without some of these specific details. In certain instances, well-known structures and functions were not described in elaborate detail in order to avoid obscuring the subject matter of the present invention. Accordingly, the scope of the invention should be judged in terms of the claims that follow.

## Claims

1. A processing apparatus (1355) comprising:
a decode logic (1331); and
an execution unit (1340),
wherein the decode logic (1331) is configured to decode a first instruction having a first operand into a decoded first instruction, decode a second instruction having a second operand into a decoded second instruction, and decode a third instruction into a decoded third instruction, **characterized in that**:
the execution unit (1340, 1341) is configured to:
execute the decoded first instruction by retrieving a first operand value including one or more first predicate values, pushing the one or more first predicate values to a location in a predicate stack indicated by a top of stack identifier and not advancing the top of stack identifier after pushing the one or more first predicate values,
execute the decoded second instruction by retrieving a second operand value including one or more second predicate values, pushing the one or more second predicate values to the location in the predicate stack indicated by the top of stack identifier and advancing the top of stack identifier after pushing the one or more second predicate values,
execute the decoded third instruction by modifying the top of stack identifier based on:
a position of the top of stack identifier before decoding the first instruction, or
a last of the one or more first predicate values pushed by the first instruction.

2. The processing apparatus (1355) as in claim 1 wherein the decode logic (1331) is further configured to decode a fourth instruction having a fourth operand into a decoded fourth instruction, the fourth operand including a logical identifier of a predicate register on the predicate stack, wherein the logical identifier is relative to the top of stack identifier.

3. The processing apparatus (1355) as in claim 2 wherein the execution unit (1340) is further configured to read a predicate value indicated by the logical identifier and conditionally execute the decoded fourth instruction based on the predicate value.

4. The processing apparatus (1355) as in claim 2 wherein the execution unit (1340) is further configured to read a predicate value indicated by the logical identifier and conditionally commit the decoded fourth instruction based on the predicate value.

5. The processing apparatus (1355) as in claim 2 further comprising register rename logic to rename the logical identifier to a physical register identifier.

6. The processing apparatus (1355) as in claim 5 wherein the register rename logic includes an arithmetic logical unit to compute the physical register identifier and a top of stack register to store the top of stack identifier.

7. The processing apparatus (1355) as in claim 6 further comprising one or more shadow top of stack registers to store the top of stack identifier.

8. A processor implemented method comprising:
decoding a first instruction having a first operand into a decoded first instruction (1514);
executing the decoded first instruction by retrieving a first operand value including one or more first predicate values (1516), pushing the one or more first predicate values to a location in a predicate stack indicated by a top of stack identifier (1520) and not advancing the top of stack identifier after pushing the one or more first predicate values (1522);
decoding a second instruction having a second operand into a decoded second instruction (1404, 1504);
executing the decoded second instruction by retrieving a second operand value including one or more second predicate values (1506), pushing the one or more second predicate values to the location in the predicate stack indicated by the top of stack identifier (1408, 1510) and advancing the top of stack identifier after pushing the one or more second predicate values (1512);
decoding a third instruction into a decoded third instruction (1524); and
executing the decoded third instruction by modifying the top of stack identifier based on:
a position of the top of stack identifier before decoding the first instruction (1532), or
a last of the one or more first predicate values pushed by the first instruction (1533).

## Patentansprüche

1. Verarbeitungsvorrichtung (1355), die Folgendes umfasst:
eine Decodierlogik (1331) und
eine Ausführungseinheit (1340), wobei
die Decodierlogik (1331) konfiguriert ist, eine erste Anweisung, die einen ersten Operanden besitzt, in eine decodierte erste Anweisung zu decodieren, eine zweite Anweisung, die einen zweiten Operanden besitzt, in eine decodierte zweite Anweisung zu decodieren und eine dritte Anweisung in eine decodierte dritte Anweisung zu decodieren,
**dadurch gekennzeichnet, dass**
die Ausführungseinheit (1340, 1341) konfiguriert ist zum
Ausführen der decodierten ersten Anweisung durch Entnehmen eines ersten Operandenwerts, der einen oder mehrere erste Prädikatwerte enthält, Schieben des einen oder der mehreren ersten Prädikatwerte zu einem Ort in einem Prädikatstapel, der durch eine Stapelspitzenkennung angegeben wird, und nicht Vorrücken der Stapelspitzenkennung nach dem Schieben des einen oder der mehreren ersten Prädikatwerte,
Ausführen der decodierten zweiten Anweisung durch Entnehmen eines zweiten Operandenwerts, der einen oder mehrere zweite Prädikatwerte enthält, Schieben des einen oder der mehreren zweiten Prädikatwerte zu dem Ort im Prädikatstapel, der durch die Stapelspitzenkennung angegeben wird, und Vorrücken der Stapelspitzenkennung nach dem Schieben des einen oder der mehreren zweiten Prädikatwerte und
Ausführen der decodierten dritten Anweisung durch Ändern der Stapelspitzenkennung auf der Grundlage
einer Position der Stapelspitzenkennung vor dem Decodieren der ersten Anweisung oder
eines letzten des einen oder der mehreren ersten Prädikatwerte, die durch die erste Anweisung geschoben wurden.

2. Verarbeitungsvorrichtung (1355) nach Anspruch 1, wobei die Decodierlogik (1331) ferner konfiguriert ist, eine vierte Anweisung, die einen vierten Operanden besitzt, in eine decodierte vierte Anweisung zu decodieren, wobei der vierte Operand eine logische Kennung eines Prädikatregisters im Prädikatstapel enthält, wobei die logische Kennung auf die Stapelspitzenkennung bezogen ist.

3. Verarbeitungsvorrichtung (1355) nach Anspruch 2, wobei die Ausführungseinheit (1340) ferner konfiguriert ist, einen Prädikatwert zu lesen, der durch die logische Kennung angegeben wird, und die decodierte vierte Anweisung auf der Grundlage des Prädikatwerts bedingt auszuführen.

4. Verarbeitungsvorrichtung (1355) nach Anspruch 2, wobei die Ausführungseinheit (1340) ferner konfiguriert ist, einen Prädikatwert zu lesen, der durch die logische Kennung angegeben wird, und die decodierte vierte Anweisung auf der Grundlage des Prädikatwerts bedingt zu übergeben.

5. Verarbeitungsvorrichtung (1355) nach Anspruch 2, die ferner eine Registerumbenennungslogik umfasst, um die logische Kennung zu einer physischen Registerkennung umzubenennen.

6. Verarbeitungsvorrichtung (1355) nach Anspruch 5, wobei die Registerumbenennungslogik eine Arithmetik/Logik-Einheit enthält, um die physische Registerkennung und eine Stapelspitzenkennung zu berechnen, um die Stapelspitzenkennung zu speichern.

7. Verarbeitungsvorrichtung (1355) nach Anspruch 6, die ferner eine oder mehrere Schattenstapelspitzenkennungen umfasst, um die Stapelspitzenkennung zu speichern.

8. Prozessorimplementiertes Verfahren, das Folgendes umfasst:
Decodieren einer ersten Anweisung, die einen ersten Operanden besitzt, in eine decodierte erste Anweisung (1514);
Ausführen der decodierten ersten Anweisung durch Entnehmen eines ersten Operandenwerts, der einen oder mehrere erste Prädikatwerte enthält (1516), Schieben des einen oder der mehreren ersten Prädikatwerte zu einem Ort in einem Prädikatstapel, der durch eine Stapelspitzenkennung angegeben wird (1520), und nicht Vorrücken der Stapelspitzenkennung nach dem Schieben des einen oder der mehreren ersten Prädikatwerte (1522);
Decodieren einer zweiten Anweisung, die einen zweiten Operanden besitzt, in eine decodierte zweite Anweisung (1404, 1504);
Ausführen der decodierten zweiten Anweisung durch Entnehmen eines zweiten Operandenwerts, der einen oder mehrere zweite Prädikatwerte enthält (1506), Schieben des einen oder der mehreren zweiten Prädikatwerte zu dem Ort im Prädikatstapel, der durch die Stapelspitzenkennung angegeben wird (1408, 1510), und Vorrücken der Stapelspitzenkennung nach dem Schieben des einen oder der mehreren zweiten Prädikatwerte (1512);
Decodieren einer dritten Anweisung in eine decodierte dritte Anweisung (1524) und
Ausführen der decodierten dritten Anweisung durch Ändern der Stapelspitzenkennung auf der Grundlage
einer Position der Stapelspitzenkennung vor dem Decodieren der ersten Anweisung (1532) oder
eines letzten des einen oder der mehreren ersten Prädikatwerte, die durch die erste Anweisung geschoben wurden (1533).

## Revendications

1. Appareil de traitement (1355) comprenant :
une logique de décodage (1331) ; et
une unité d'exécution (1340),
dans lequel la logique de décodage (1331) est configurée pour décoder une première instruction ayant un premier opérande dans une première instruction décodée, décoder une deuxième instruction ayant un deuxième opérande dans une deuxième instruction décodée, et décoder une troisième instruction dans une troisième instruction décodée,
**caractérisé en ce que :**
l'unité d'exécution (1340, 1341) est configurée pour :
exécuter la première instruction décodée en récupérant une première valeur d'opérande comprenant une ou plusieurs premières valeurs de prédicat, en poussant la ou les premières valeurs de prédicat vers un emplacement dans une pile de prédicats indiquée par un dessus d'un identifiant de pile et en n'avançant pas le dessus de l'identifiant de pile après avoir poussé la ou les premières valeurs de prédicat,
exécuter la deuxième instruction décodée en récupérant une seconde valeur d'opérande comprenant une ou plusieurs secondes valeurs de prédicat, en poussant la ou les secondes valeurs de prédicat vers l'emplacement dans la pile de prédicats indiquée par le dessus de l'identifiant de pile et en avançant le dessus de l'identifiant de pile après avoir poussé la ou les secondes valeurs de prédicat,
exécuter la troisième instruction décodée en modifiant le dessus de l'identifiant de pile sur la base de :
une position du dessus de l'identifiant de pile avant de décoder la première instruction, ou
une dernière de la ou des premières valeurs de prédicat poussée par la première instruction.

2. Appareil de traitement (1355) selon la revendication 1, dans lequel la logique de décodage (1331) est configurée en outre pour décoder une quatrième instruction ayant un quatrième opérande dans une quatrième instruction décodée, le quatrième opérande comprenant un identifiant logique d'un registre de prédicat sur la pile de prédicats, l'identifiant logique étant relatif au dessus de l'identifiant de pile.

3. Appareil de traitement (1355) selon la revendication 2, dans lequel l'unité d'exécution (1340) est configurée en outre pour lire une valeur de prédicat indiquée par l'identifiant logique et exécuter sous condition la quatrième instruction décodée sur la base de la valeur de prédicat.

4. Appareil de traitement (1355) selon la revendication 2, dans lequel l'unité d'exécution (1340) est configurée en outre pour lire une valeur de prédicat indiquée par l'identifiant logique et engager sous condition la quatrième instruction décodée sur la base de la valeur de prédicat.

5. Appareil de traitement (1355) selon la revendication 2, comprenant en outre une logique de renommage de registre pour renommer l'identifiant logique en un identifiant de registre physique.

6. Appareil de traitement (1355) selon la revendication 5, dans lequel la logique de renommage de registre comprend une unité logique arithmétique pour calculer l'identifiant de registre physique et un dessus du registre de pile pour stocker le dessus de l'identifiant de pile.

7. Appareil de traitement (1355) selon la revendication 6, comprenant en outre un ou plusieurs dessus d'ombre de registres de pile pour stocker le dessus de l'identifiant de pile.

8. Procédé mis en œuvre par un processeur consistant à :
décoder une première instruction ayant un premier opérande dans une première instruction décodée (1514) ;
exécuter la première instruction décodée en récupérant une première valeur d'opérande comprenant une ou plusieurs premières valeurs de prédicat (1516), en poussant la ou les premières valeurs de prédicat vers un emplacement dans une pile de prédicats indiquée par un dessus d'un identifiant de pile (1520) et en n'avançant pas le dessus de l'identifiant de pile après avoir poussé la ou les premières valeurs de prédicat (1522) ;
décoder une deuxième instruction ayant un deuxième opérande dans une deuxième instruction décodée (1404, 1504) ;
exécuter la deuxième instruction décodée en récupérant une seconde valeur d'opérande comprenant une ou plusieurs secondes valeurs de prédicat (1506), en poussant la ou les secondes valeurs de prédicat vers l'emplacement dans la pile de prédicats indiquée par le dessus de l'identifiant de pile (1408, 1510) et en avançant le dessus de l'identifiant de pile après avoir poussé la ou les secondes valeurs de prédicat (1512) ;
décoder une troisième instruction dans une troisième instruction décodée (1524) ; et
exécuter la troisième instruction décodée en modifiant le dessus de l'identifiant de pile sur la base de :
une position du dessus de l'identifiant de pile avant de décoder la première instruction (1532), ou
une dernière de la ou des premières valeurs de prédicat poussée par la première instruction (1533).
